# EUROPEAN PATENT APPLICATION

(11) **EP 4 746 134 A1**
(43) Date of publication of application: **20.05.2026**
(21) Application number: 24842871.6
(22) Date of filing: 18.06.2024
(51) Int. Cl.: H01M 10/657, B60L 58/22, B60L 58/25, H01M 10/44, H01M 10/48, H01M 10/615, H01M 10/625, H01M 10/633, H01M 10/637, H01M 10/667, H02J 7/34

(54) **POWER SUPPLY SYSTEM, CONTROL DEVICE, AND CONTROL PROGRAM**

(30) Priority: 14.07.2023 JP 2023116077
(71) Applicant: DENSO CORPORATION, Kariya-city, Aichi 448-8661 (JP)
(72) Inventor: ITO, Mitsutaka, Nisshin-city, Aichi 4700111 (JP); KURACHI, Taisuke, Kariya- city, Aichi 4488661 (JP)
(74) Representative: TBK
(86) International application number: PCT/JP2024/021998
(87) International publication number: WO 2025/018075

(57) **Abstract**

In a power supply system (10), rechargeable battery modules (30, 60, 90) and a load (21) are connected in parallel with a power supply bus (11, 12). Each rechargeable battery module includes a rechargeable battery (31, 61, 91) and a conversion circuit (40, 70, 100). A positive electrode and a negative electrode of the rechargeable battery of each rechargeable battery module are connected to the paired primary-side terminals, respectively, of the conversion circuit. The rechargeable battery of each rechargeable battery module is connected in series to the paired secondary-side terminals of the conversion circuit. The power supply system is configured to control the conversion circuit of each rechargeable battery module to simultaneously execute the energization operation and the temperature-raising operation.

## Description

### CROSS REFERENCE TO RELATED APPLICATION

The present application is based on Japanese Patent Application No. 2023-116077 filed on July 14, 2023, the contents of which are incorporated herein by reference.

### TECHNICAL FIELD

The present disclosure relates to a power supply system.

### BACKGROUND

For example, there is a power supply system (see Patent Literature 1) including a plurality of power conversion devices respectively provided for multiple power storage devices. The power supply system is configured to determine a specified number of power storage devices to be operated on the basis of (i) the power required for a load device and (ii) the permissible charge/discharge power of each storage battery; the permissible charge/discharge power of each storage battery is determined based on the state of the corresponding storage battery. The power supply system is additionally configured to interchange power with the load device, using the specified number of power storage devices.

Compared with the cases in which all the power storage devices are used to interchange power with the load device, the power supply system described in Patent Literature 1 makes it possible to increase the charging/discharging current per storage battery, thus increasing the amount of heat generation per storage battery, and therefore smoothly raise the temperatures of the power storage devices.

### [Citation List]

### [Patent Literature]

[PTL 1] JP 2009-11138 A

### SUMMARY

However, the power supply system described in Patent Literature 1 cannot flexibly adjust the temperatures of all the power storage devices while the specified number of power storage devices discharge power to the load device to raise the temperatures of the specified number of power storage devices (rechargeable batteries). Additionally, when the load device charges the specified number of power storage devices to raise the temperatures of the specified number of power storage devices, the power supply system cannot flexibly adjust the temperatures of all the power storage devices while the load device charges the power storage devices.

The present disclosure seeks to resolve the problems described above, and a main object of the present disclosure is to provide a power supply system including a plurality of rechargeable batteries, the power supply system being capable of flexibly adjusting the temperatures of the rechargeable batteries while energization is performed between the rechargeable batteries and a load.

A first aspect of the present disclosure, which seeks to address the above problems, provides a power supply system in which a plurality of rechargeable battery modules and a load are connected in parallel with a power supply bus. Each of the plurality of rechargeable battery modules includes a rechargeable battery and a conversion circuit that converts power input from the rechargeable battery to paired primary-side terminals of the conversion circuit and outputs converted power from paired secondary-side terminals of the conversion circuit. A positive electrode and a negative electrode of the rechargeable battery of each rechargeable battery module are connected to the paired primary-side terminals, respectively, of the conversion circuit. The rechargeable battery of each rechargeable battery module is connected in series to the paired secondary-side terminals of the conversion circuit. The power supply system includes an energization execution section configured to control the conversion circuit of each rechargeable battery module to execute an energization operation between the rechargeable batteries and the load, and a temperature-raising execution section configured to control the conversion circuit of each rechargeable battery module to execute a temperature-raising operation for performing charging/discharging among the rechargeable batteries, thus raising temperatures of the rechargeable batteries.

The power supply system is configured to simultaneously execute the energization operation by the energization execution section and the temperature-raising operation by the temperature-raising execution section.

In the configuration described above of the power supply system, the plurality of rechargeable battery modules and the load are connected in parallel with the power supply bus. Each of the plurality of rechargeable battery modules includes the rechargeable battery and the conversion circuit that converts power input from the rechargeable battery to the paired primary-side terminals of the conversion circuit and outputs converted power from the paired secondary-side terminals of the conversion circuit.

Therefore, the plurality of rechargeable batteries can discharge power to the load via the power supply bus, and the load can charge the rechargeable batteries via the power supply bus. The power supply bus is, in the power supply system, a power path (a common power path) that connects among a plurality of circuits, devices, and equipment and is shared thereamong for exchange of power.

The positive electrode and the negative electrode of the rechargeable battery of each rechargeable battery module are connected to the paired primary-side terminals, respectively, of the conversion circuit. The rechargeable battery of each rechargeable battery module is connected in series to the paired secondary-side terminals of the conversion circuit.

In this configuration, a voltage obtained by summing up an output voltage Vb of the rechargeable battery and an output voltage Vo of the conversion circuit is an output voltage Vm of each rechargeable battery module. Therefore, compared with a rechargeable battery module in which a rechargeable battery is connected in parallel with a pair of secondary-side terminals of a conversion circuit, it is possible to lower the output voltage Vo required for the conversion circuit when the output voltage Vm is required for the rechargeable battery module. Accordingly, the rated voltage of the conversion circuit can be lowered, thus enabling the reduction in rated capacity of the conversion circuit, and it is therefore possible to downsize the conversion circuit.

The energization execution section is configured to control the conversion circuit of each rechargeable battery module to execute the energization operation between the rechargeable batteries and the load. This makes it possible to raise the temperature of the rechargeable batteries through heat generation associated with the energization operation.

The temperature-raising execution section is configured to control the conversion circuit of each rechargeable battery module to execute the temperature-raising operation for performing charging/discharging among the rechargeable batteries, thus raising temperatures of the rechargeable batteries. Therefore, apart from raising the temperature of each rechargeable battery by the energization operation executed between the corresponding rechargeable battery and the load, it is possible to raise the temperatures of the rechargeable batteries for which the temperature-raising operation has been executed.

Additionally, the power supply system is configured to simultaneously execute the energization operation by the energization execution section and the temperature-raising operation by the temperature-raising execution section. This therefore makes it possible to flexibly adjust the temperatures of the rechargeable batteries while energization is performed between the rechargeable batteries and the load.

A second aspect of the present disclosure further includes a state acquisition unit configured to acquire a state of each of the rechargeable batteries. The energization execution section is configured to adjust a power ratio among the rechargeable batteries in the energization operation in accordance with the states of the rechargeable batteries acquired by the state acquisition units.

In this configuration, the power ratio between the rechargeable batteries in the energization operation is adjusted in accordance with the states of the rechargeable batteries, and therefore, the temperatures of the rechargeable batteries can be further flexibly adjusted through the energization operation by the energization execution section.

In a third aspect, the state acquisition unit is configured to acquire, as the state of each of the rechargeable batteries, a state of charge of each of the rechargeable batteries. The energization execution section is configured to adjust the power ratio among the rechargeable batteries in the energization operation so as to reduce a difference among the states of charge of the rechargeable batteries acquired by the state acquisition units.

In this configuration, not only is the energization performed between the rechargeable batteries and the load through the energization operation by the energization execution section, but also the difference between the states of charge of the rechargeable batteries can be reduced.

In a fourth aspect, the state acquisition unit is configured to acquire, as the state of each of the rechargeable batteries, a state of health of each of the rechargeable batteries. The energization execution section is configured to set the power ratio among the rechargeable batteries in the energization operation such that at least one rechargeable battery among the rechargeable batteries, each having a higher value of the state of health acquired by the state acquisition unit than any other rechargeable battery, has a higher power level than any other rechargeable battery.

In this configuration, not only is the energization performed between the rechargeable batteries and the load through the energization operation by the energization execution section, but also the difference between the states of health of the plurality of rechargeable batteries can be reduced. That is, by increasing the energization power in the energization operation, the higher the state of health of the rechargeable battery is, the difference in state of health from any other rechargeable battery can be reduced. The state of health (SOH) [%] of the rechargeable battery can be calculated by the equation: SOH [%] = present full charge capacity × 100/full charge capacity at production.

A fifth aspect further includes a condition acquisition section configured to acquire a situation of each of the rechargeable batteries, the situation of each of the batteries including at least one of the state, a physical arrangement, and an energization schedule of the corresponding one of the rechargeable batteries. The temperature-raising execution section is configured to determine, from the rechargeable batteries, one of the rechargeable batteries as a temperature-rise target battery to be subjected to the temperature-raising operation in accordance with the situations of the rechargeable batteries acquired by the situation acquisition section.

In this configuration, the temperature-rise target battery can be appropriately determined on the basis of the situation of each of the plurality of rechargeable batteries. The acquisition of the energization schedules includes receiving the energization schedules through communication or the like, and predicting the energization schedules.

In a sixth aspect, the situation acquisition section is configured to acquire, as the situation of each of the rechargeable batteries, the state of health of the corresponding one of the rechargeable batteries. The temperature-raising execution section is configured to select, from the rechargeable batteries, a rechargeable battery as the temperature-rise target battery, the selected rechargeable battery having a higher value of the state of health acquired by the situation acquisition section than any other rechargeable battery.

In this configuration, not only are the temperatures of the rechargeable batteries raised through the temperature-raising operation by the temperature-raising execution section, but also the difference between the states of health of the rechargeable batteries can be reduced. That is, by positively executing the temperature-raising operation for the battery having a higher state of health than the states of health of any other rechargeable battery, the difference in state of health from any other rechargeable battery can be reduced.

In a seventh aspect, the situation acquisition section is configured to acquire, as the situation of each of the rechargeable batteries, the physical arrangement of the corresponding one of the rechargeable batteries. The temperature-raising execution section is configured to select, from the rechargeable batteries, a rechargeable battery as the temperature-rise target battery in accordance with the physical arrangement of each of the rechargeable batteries. The selected rechargeable battery is less likely to receive heat from a surrounding environment than any other rechargeable battery or is configured to more easily dissipate heat to the surrounding environment than any other rechargeable battery.

In the configuration described above, the temperature-raising execution section is configured to select, from the rechargeable batteries, a rechargeable battery as the temperature-rise target battery in accordance with the physical arrangement of each of the rechargeable batteries. The selected rechargeable battery being less likely to receive heat from a surrounding environment than any other rechargeable battery. Therefore, the temperature of the rechargeable battery that is less likely to be warmed than any other rechargeable battery or that is more easily cooled than any other rechargeable battery can be raised in advance. Alternatively, the temperature-raising execution section is configured to select, from the rechargeable batteries, a rechargeable battery as the temperature-rise target battery in accordance with the physical arrangement of each of the rechargeable batteries. The selected rechargeable battery is arranged such that heat is more likely to be dissipated to the surrounding environment than any other rechargeable battery. Therefore, the temperature of the selected rechargeable battery that is more easily cooled than any other battery can be raised in advance.

In an eighth aspect, the temperature-raising execution section is configured to execute the temperature-raising operation so as to keep the temperature of the temperature-rise target battery at a specified temperature or higher when an ambient temperature is determined to be lower than the temperatures of the rechargeable batteries.

In this configuration, for example, even when the ambient temperature is lower than the temperatures of the rechargeable batteries after completion of the energization operation executed between the rechargeable batteries and the load, the temperature-raising operation can keep the temperatures of the rechargeable batteries at a specified temperature or higher. Accordingly, when charging/discharging is required for the power supply system, charging/discharging can be promptly executed according to the charging/discharging requirement.

In a ninth aspect, the situation acquisition section is configured to acquire, as the situation of each of the rechargeable batteries, the state and the energization schedule of each of the rechargeable batteries. The temperature-raising execution section is configured to select, from the rechargeable batteries, a rechargeable battery as the temperature-rise target battery in accordance with the state and the energization schedule of each of the rechargeable batteries.

In this configuration, the temperature-rise target battery can be appropriately determined in consideration of the states and the energization schedules of the rechargeable batteries. For example, by determining, as the temperature-rise target battery, the rechargeable battery that is scheduled to execute the energization operation between the rechargeable battery and the load and needs to raise the temperature thereof, the energization operation executed between the rechargeable battery and the load can be smoothly started.

In a tenth aspect, the temperature-raising execution section is configured to select, from the rechargeable batteries, the temperature-rise target battery such that the temperature-rise target battery has a higher amount of increase in permissible power than any other rechargeable battery, the increase occurring between before and after execution of the temperature-raising operation.

In this configuration, the temperature-raising operation can effectively increase the permissible power of the rechargeable battery, enabling the power supply system to effectively improve the power-carrying capacity thereof.

In an eleventh aspect, the temperature-raising execution section is configured to increase the state of charge of the temperature-rise target battery to be higher than the state of charge of any other rechargeable battery using a charging operation from the load or any other rechargeable battery before execution of the temperature-raising operation.

In this configuration, even when the state of charge of the temperature-rise target battery is lowered by the temperature-raising operation, the difference between the states of charge of the rechargeable batteries can be prevented from increasing.

A twelfth aspect provides a control apparatus to be applied to a power supply system in which a plurality of rechargeable battery modules and a load are connected in parallel with a power supply bus. Each of the plurality of rechargeable battery modules includes a rechargeable battery and a conversion circuit that converts power input from the rechargeable battery to paired primary-side terminals of the conversion circuit and outputs converted power from paired secondary-side terminals of the conversion circuit. A positive electrode and a negative electrode of the rechargeable battery of each rechargeable battery module are connected to the paired primary-side terminals, respectively, of the conversion circuit. The rechargeable battery of each rechargeable battery module is connected in series to the paired secondary-side terminals of the conversion circuit. The control apparatus includes an energization execution section configured to control the conversion circuit of each rechargeable battery module to execute an energization operation between the rechargeable batteries and the load, and a temperature-raising execution section configured to control the conversion circuit of each rechargeable battery module to execute a temperature-raising operation for performing charging/discharging among the rechargeable batteries, thus raising temperatures of the rechargeable batteries.

The control apparatus is configured to simultaneously execute the energization operation by the energization execution section and the temperature-raising operation by the temperature-raising execution section.

In the configuration described above, the control apparatus, which is to be applied to the power supply system, makes it possible to exhibit the same advantageous benefits as the first aspect.

A thirteenth aspect provides a control program to be applied to a power supply system in which a plurality of rechargeable battery modules and a load are connected in parallel with a power supply bus. Each of the plurality of rechargeable battery modules includes a rechargeable battery and a conversion circuit that converts power input from the rechargeable battery to paired primary-side terminals of the conversion circuit and outputs converted power from paired secondary-side terminals of the conversion circuit. A positive electrode and a negative electrode of the rechargeable battery of each rechargeable battery module are connected to the paired primary-side terminals, respectively, of the conversion circuit. The rechargeable battery of each rechargeable battery module is connected in series to the paired secondary-side terminals of the conversion circuit. The control program causes a computer to control the conversion circuit of each rechargeable battery module to execute an energization operation between the rechargeable batteries and the load, control the conversion circuit of each rechargeable battery module to execute a temperature-raising operation for performing charging/discharging among the rechargeable batteries, thus raising temperatures of the rechargeable batteries, and cause the energization execution section and the temperature-raising execution section to simultaneously execute the energization operation by the energization execution section and the temperature-raising operation.

In the configuration described above, the same advantageous benefits as the first aspect can be exhibited by causing the computer to execute the control program to be applied to the power supply system.

### BRIEF DESCRIPTION OF THE DRAWINGS

The object described above and another object, a feature, and an advantage of the present disclosure are further clarified by the following detailed description with reference to accompanying drawings. In the accompanying drawings:
Fig. 1 is a circuit diagram of a power supply system;
Fig. 2 is a circuit diagram illustrating one example of a conversion circuit;
Fig. 3 is a flowchart illustrating a procedure of an energization operation and a temperature-raising operation;
Fig. 4 is a graph illustrating a relationship between internal resistance of a rechargeable battery and AC current frequency;
Fig. 5 is a graph illustrating a relationship between the amount of generated heat and current amplitude;
Fig. 6 is a schematic diagram illustrating an example of execution of the energization operation and the temperature-raising operation;
Fig. 7 is a graph illustrating the current of the rechargeable battery of each of rechargeable battery modules;
Figs. 8A to 8C are a joint timing chart illustrating the transition in the drive state of the rechargeable battery modules, the temperature of the rechargeable batteries, and the SOC of the rechargeable batteries;
Figs. 9A to 9C are a joint timing chart illustrating the transition in the drive state of the rechargeable battery modules, the temperature of the rechargeable batteries, and the SOC of the rechargeable batteries in a comparative example;
Fig. 10 is a schematic diagram illustrating another example of execution of the energization operation and the temperature-raising operation;
Fig. 11 is a schematic diagram illustrating another example of execution of the energization operation and the temperature-raising operation;
Fig. 12 is a schematic diagram illustrating another example of execution of the energization operation and the temperature-raising operation;
Fig. 13 is a schematic diagram illustrating another example of execution of the energization operation and the temperature-raising operation;
Fig. 14 is a schematic diagram illustrating another example of execution of the energization operation and the temperature-raising operation;
Fig. 15 is a schematic diagram illustrating an example of execution of the temperature-raising operation;
Fig. 16 is a schematic diagram illustrating another example of execution of the temperature-raising operation;
Fig. 17 is a circuit diagram of a modified example of the power supply system;
Fig. 18 is a circuit diagram of a modified example of the conversion circuit;
Fig. 19 is a circuit diagram of another modified example of the conversion circuit; and
Fig. 20 is a circuit diagram of a modified example of the rechargeable battery modules.

### DESCRIPTION OF EMBODIMENTS

The following describes an embodiment in which a power supply system that executes output of power and input of power with a load is implemented with reference to the drawings.

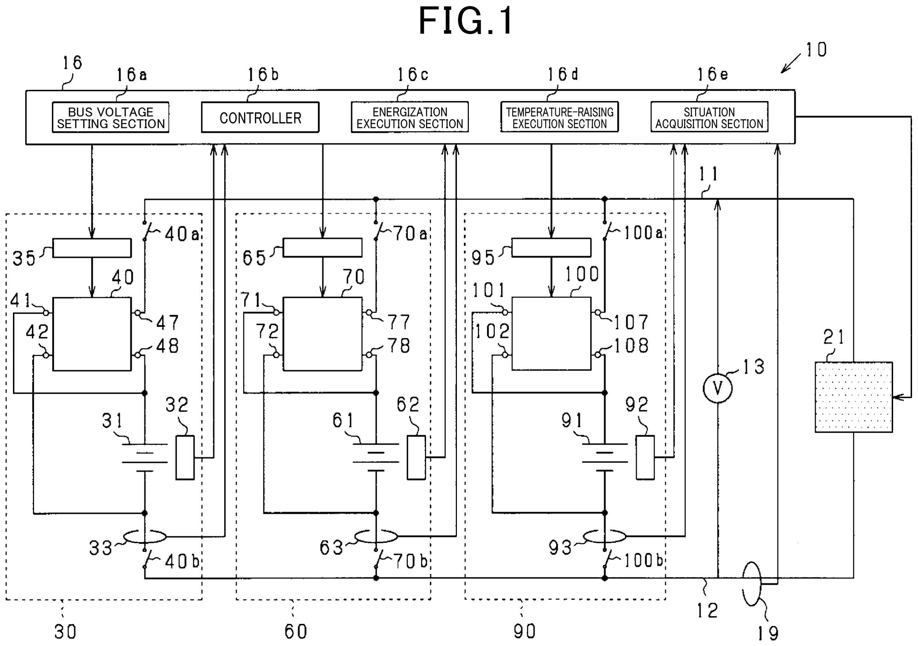

As illustrated in Fig. 1, a power supply system 10 includes buses 11 and 12 (power supply buses), a first rechargeable battery module 30, a second rechargeable battery module 60, a third rechargeable battery module 90, a voltage sensor 13, a current sensor 19, an ECU (Electronic Control Unit) 16, and other devices. The positive-electrode side (positive side) of the buses 11 and 12 is referred to as a bus 11, and the negative-electrode side (negative side) of the buses 11 and 12 is referred to as a bus 12. The bus 12 is grounded.

To the buses 11, 12, the first rechargeable battery module 30 (rechargeable battery module), the second rechargeable battery module 60 (rechargeable battery module), the third rechargeable battery module 90 (rechargeable battery module), a load 21, and the voltage sensor 13 are connected in parallel. The rechargeable battery modules 30, 60, 90 input power to and output power from the buses 11, 12. The load 21 includes a plurality of loads and inputs power from and outputs power to the buses 11, 12. The voltage sensor 13 detects a bus voltage Vbus that is a voltage between the buses 12 and 11. The current sensor 19 detects a current flowing through the bus 12 (i.e., a current associated with the load 21).

Examples of the load 21 include a combination (a motor unit equipped with an inverter) of an inverter and an MG (Motor Generator), an electric heater, a DC-DC converter, and an external charger (charging device). The MG (electric motor generator), for example, drives an electric vehicle by power supplied from the inverter, or generates regenerative power through torque imparted from the electric vehicle. The inverter converts power between the buses 11, 12 and the MG. The electric heater, for example, generates heat by high voltage (voltage) supplied from the buses 11, 12, and warms the interior of the car, a battery, or the like. The DC-DC converter, for example, converts DC power supplied from the buses 11, 12 and supplies converted DC power, or converts DC power supplied from a solar panel or the like and supplies converted DC power to the buses 11, 12. The external charger inputs power to the buses 11, 12, and thereby charges rechargeable batteries 31, 61, 91.

The first rechargeable battery module 30 includes the first rechargeable battery 31, a first current sensor 33, a first driver circuit 35, a first conversion circuit 40, relays 40a, 40b, a BMU 32 (Battery Management Unit), and the like. The first rechargeable battery 31 (rechargeable battery) is, for example, a high-voltage secondary battery including a lithium-ion battery, a nickel-metal hydride battery, or the like, and any type can be used.

The first current sensor 33 (current sensor) detects a current flowing through the first rechargeable battery 31. The value detected by the first current sensor 33 is input to the ECU 16, and, for example, is used for the calculation of the state of charge (SOC) [%] of the first rechargeable battery 31. The first driver circuit 35 (driver circuit) drives switching devices (described later) of the first conversion circuit 40 for turning on and off.

The first drive circuit 35 (drive circuit) performs on/off driving of switching devices (to be described later) provided in the first conversion circuit 40. The first driver circuit 35 is controlled by the ECU 16. The relays 40a, 40b disconnect or connect the rechargeable battery module 30 to the buses 11, 12, respectively. The first rechargeable battery 31 (rechargeable battery) may be a non-high-voltage secondary battery. The value detected by the first current sensor 33 may be input to the BMU 32.

The first conversion circuit 40 (conversion circuit) includes a pair of primary-side terminals, i.e., a positive terminal 41 and a negative terminal 42 on the primary side, and a pair of secondary-side terminals, i.e., a positive terminal 47 and a negative terminal 48 on the secondary side. The negative electrode of the first rechargeable battery 31 is connected to the bus 12. The primary-side positive terminal 41 is connected to the positive electrode of the first rechargeable battery 31, and the primary-side negative terminal 42 is connected to the negative electrode of the first rechargeable battery 31. The secondary-side negative terminal 48 is connected to the positive electrode of the first rechargeable battery 31. The secondary-side positive terminal 47 is connected to the bus 11. That is, the positive electrode and the negative electrode of the first rechargeable battery 31 are connected to the pair of primary-side terminals 41, 42, respectively, of the first conversion circuit 40, and the first rechargeable battery 31 is connected in series to the pair of secondary-side terminals 47, 48 of the first conversion circuit 40.

The first conversion circuit 40 converts power input from the first rechargeable battery 31 to the pair of primary-side terminals 41, 42, and outputs converted power from the pair of secondary-side terminals 47, 48. The first conversion circuit 40 is a bidirectional conversion circuit capable of converting power input to the pair of secondary-side terminals 47, 48 and outputting converted power from the pair of primary-side terminals 41, 42.

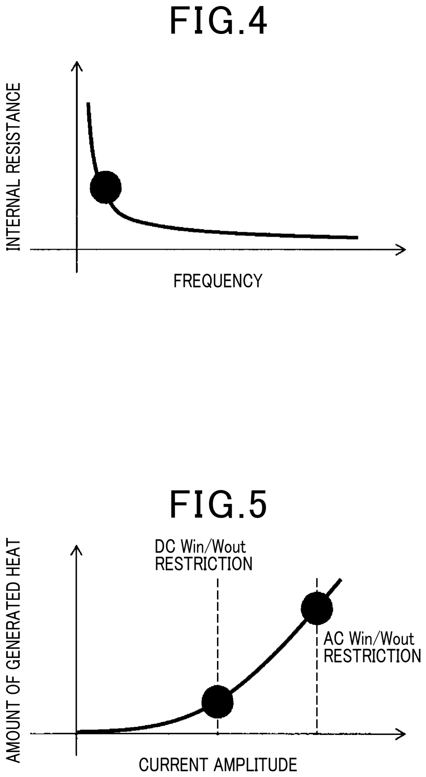

The BMU 32 (state acquisition unit) includes a temperature sensor, a storage device, an arithmetic device, and the like. The temperature sensor detects a temperature of the first rechargeable battery 31 as a parameter indicative of the state of the first rechargeable battery 31. The storage device, which serves as a storage, stores characteristics of the first rechargeable battery 31. Examples of the characteristics of the first rechargeable battery 31 include:
(i) the relationship between internal resistance of the first rechargeable battery 31 and AC current frequency, which is represented as the graph of "INTERNAL RESISTANCE-FREQUENCY" illustrated in Fig. 4;
(ii) the relationship between the amount of heat generated by the first rechargeable battery 31, current amplitude, and energization restrictions, which is represented as the graph of "AMOUNT OF GENERATED HEAT-CURRENT AMPLITUDE" illustrated in Fig. 5; and
(iii) the relationship between open circuit voltage OCV and the SOC of the first rechargeable battery 31.

The BMU 32 applies a value of the open circuit voltage OCV detected by a voltage sensor 51 to a graph or map specifying a relationship between the open circuit voltage OCV and the SOC, which is an example of the state, of the first rechargeable battery 31 to thereby calculate, i.e., acquire, a value of the SOC of the first rechargeable battery 31.

The BMU 32 updates the SOC, which has been calculated based on the open circuit voltage OCV, in accordance with the integrated value of current detected by the first current sensor 33. The BMU 32 estimates, i.e., acquires, the SOH (State of Health) of the first rechargeable battery 31 as follows:
Specifically, the BMU 32 calculates, i.e., acquires, the full charge capacity, which is an example of the state, of the first rechargeable battery 31 in accordance with, for example, the equation: Full charge capacity [Ah] = Amount of charge × 100/(SOC-after-charge - SOC-before-charge). The amount of charge of the first rechargeable battery 31 is the integrated value of values of the current (values) flowing through the first rechargeable battery 31 from the start to the completion of charging, and can be calculated, for example, by integrating the current (values) detected by the current sensor 33.

The BMU 32 calculates, i.e., acquires, the SOH [%], which is an example of the state, of the first rechargeable battery 31, for example, by the equation: SOH [%] = Present full charge capacity × 100/Full charge capacity at manufacture. The SOC and the SOH of the first rechargeable battery 31 may be calculated, i.e., acquired, by a situation acquisition section 16e of the ECU 16, or the situation acquisition section 16e, i.e., the ECU 16, may receive, i.e., acquire, the SOC and the SOH of the first rechargeable battery 31 from the BMU 32.

The second rechargeable battery module 60 has the same configuration as the first rechargeable battery module 30, and includes the second rechargeable battery 61 (rechargeable battery), a second current sensor 63 (current sensor), a second driver circuit 65 (driver circuit), a second conversion circuit 70, relays 70a, 70b, a BMU 62, and the like. The second conversion circuit 70 (conversion circuit) has the same configuration as the first conversion circuit 40, and includes a pair of primary-side terminals, i.e., a positive terminal 71 and a negative terminal 72 on the primary side, and a pair of secondary-side terminals, i.e., a positive terminal 77 and a negative terminal 78 on the secondary side. The connection configuration of these components is the same as in the first rechargeable battery module 30, and therefore, the descriptions about the first rechargeable battery module 30 are incorporated herein by reference. The BMU 62 (situation acquisition section) has the same configuration as the BMU 32, and therefore, the descriptions about the BMU 32 are incorporated herein by reference. The first and second rechargeable battery modules 30 and 60 have configurations having the same functions, but the rating and the withstand voltage of the first rechargeable battery module 30 may be different from those of the second rechargeable battery module 60.

The third rechargeable battery module 90 has the same configuration as the first rechargeable battery module 30, and includes the third rechargeable battery 91 (rechargeable battery), a third current sensor 93 (current sensor), a third driver circuit 95 (driver circuit), a third conversion circuit 100, relays 100a, 100b, a BMU 92, and the like. The third conversion circuit 100 (conversion circuit) has the same configuration as the first conversion circuit 40, and includes a pair of primary-side terminals, i.e., a positive terminal 101 and a negative terminal 102 on the primary side, and a pair of secondary-side terminals, i.e., a positive terminal 107 and a negative terminal 108 on the secondary side. The connection configuration of these components are the same as in the first rechargeable battery module 30, and therefore, the descriptions about the first rechargeable battery module 30 are incorporated herein by reference. The BMU 92 (situation acquisition section) has the same configuration as the BMU 32, and therefore, the descriptions about the BMU 32 are incorporated herein by reference. The first and third rechargeable battery modules 30 and 90 have configurations having the same functions, but the rating and the withstand voltage of the first rechargeable battery module 30 may be different from those of the third rechargeable battery module 90.

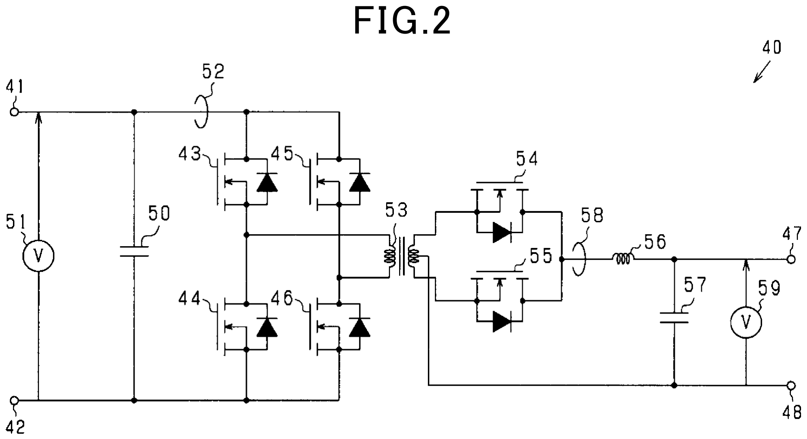

Fig. 2 illustrates an example of the first conversion circuit 40 that is a known center-tapped isolated DC-DC converter.

Specifically, the first conversion circuit 40 includes switching devices 43 to 46, 54, 55, smoothing capacitors 50, 57, a transformer, which is comprised of primary and secondary windings, 53, an inductor (reactor) 56, voltage sensors 51, 59, current sensors 52, 58, and the like. Each of the switching devices 43 to 46, 54, 55 is, for example, a MOSFET or an IGBT (Insulated Gate Bipolar Transistor). The switching devices 43 to 46 constitute a full-bridge circuit. A junction between the switching devices 43 and 44 is connected to a first end of the primary winding of the transformer 53, and a junction between the switching devices 45 and 46 is connected to a second end of the primary winding of the transformer 53.

The switching device 54 is connected between a first end of the secondary winding of the transformer 53 and the reactor 56, and the switching device 55 is connected between a second end of the secondary winding of the transformer 53 and the reactor 56.

The voltage sensor 51 detects a voltage between the negative terminal 42 and the positive terminal 41 on the primary side, that is, detects an output voltage Vb of the first rechargeable battery 31. The current sensor 52 detects an input current Ii that is a current input to the primary side of the transformer 53. The voltage sensor 59 detects a voltage between the negative terminal 48 and the positive terminal 47 on the secondary side, i.e., detects an output voltage Vo of the first conversion circuit 40. The current sensor 58 detects a current flowing through the inductor 56, i.e., detects an output current Io of the first conversion circuit 40. The values detected by the voltage sensors 51, 59 and the current sensors 52, 58 are input to the ECU 16. The values detected by the voltage sensor 51 may be input to the BMU 32.

The ECU, which serves as a control unit, 16 is configured as, for example, a microcomputer or a computer including a CPU, a ROM, a RAM, a storage device, an input/output interface, and/or the other peripheral devices.

The ECU 16 controls the state of each of the relays 40a, 40b, 70a, 70b, 100a, 100b, and the state of the load 21. Further, the ECU 16 executes a control program to be applied to the power supply system 10 to thereby implement functional units including, for example, a bus voltage setting section 16a, a controller 16b, an energization execution section 16c, a temperature-raising execution section 16d, the situation acquisition section 16e. The BMUs 32, 62, 92 are capable of communicating with the ECU 16 by wire or wireless means.

The bus voltage setting section 16a sets a bus voltage request value Vbus* that is a voltage required to be supplied from the buses 11, 12 to the load 21. More specifically, the bus voltage setting section 16a sets the bus voltage request value Vbus* based on the state of the load 21.

The controller 16b controls each of the output voltage Vo of the conversion circuits 40 (referred to as a first output voltage Vo1), the output voltage of the conversion circuit 70 (referred to as a second output voltage Vo2), and the output voltage of the conversion circuit 100 (referred to as a third output voltage Vo3), so that output voltages Vm1, Vm2, Vm3 of the respective rechargeable battery modules 30, 60, 90 each approach or become the bus voltage request value Vbus*.

For example, the controller 16b controls the switching devices 43 to 46, 54, 55 based on the values detected by the voltage sensors 51, 59 and the current sensors 52, 58, thus causing the first output voltage Vo1 of the first conversion circuit 40 to approach or become a first output voltage request value Vo1*. In detail, the first output voltage request value Vo1* is set to a voltage obtained by subtracting a first output voltage Vb1 of the first rechargeable battery 31 from the bus voltage request value Vbus* (Vo1* = Vbus* - Vb1).

Similarly, the controller 16b controls the second output voltage Vo2 of the second conversion circuit 70 to cause the second output voltage Vo2 to approach or become a second output voltage request value Vo2*. In detail, the second output voltage request value Vo2* is set to a voltage obtained by subtracting a second output voltage Vb2 of the second rechargeable battery 61 from the bus voltage request value Vbus* (Vo2* = Vbus* - Vb2).

Additionally, the controller 16b controls the third output voltage Vo3 of the third conversion circuit 100 to cause the third output voltage Vo3 to approach or become a third output voltage request value Vo3*. In detail, the third output voltage request value Vo3* is set to a voltage obtained by subtracting a third output voltage Vb3 of the third rechargeable battery 91 from the bus voltage request value Vbus* (Vo3* = Vbus* - Vb3).

The energization execution section 16c controls each of the conversion circuits 40, 70, 100 of the rechargeable battery modules 30, 60, 90, to thereby execute energization operations between each of the rechargeable batteries 31, 61, 91 and the load 21. The energization operations include an operation of discharging power from the rechargeable batteries 31, 61, 91 to the load 21 (for example, a motor unit equipped with an inverter) and an operation of charging the rechargeable batteries 31, 61, 91 with power from the load 21 (for example, an external charger). Specifically, the energization execution section 16c causes a DC load current to flow between each of the rechargeable batteries 31, 61, 91 and the load 21 in the energization operations.

The temperature-raising execution section 16d controls the conversion circuits 40, 70, 100 of the rechargeable battery modules 30, 60, 90 to execute a temperature-raising operation that performs charging/or discharging between the rechargeable batteries 31, 61, 91, thus raising the temperatures of the rechargeable batteries 31, 61, 91. Specifically, the temperature-raising execution section 16d causes an AC heat-generating current to flow between the rechargeable batteries 31, 61 91 in the temperature-raising operation.

The situation acquisition section 16e acquires the situation of each of the rechargeable batteries 31, 61, 91. The situation of each of the rechargeable batteries 31, 61, 91 includes, for example, (i) the state of the corresponding one of the rechargeable batteries 31, 61, 91 acquired by the corresponding one of the BMUs 32, 62, 92 and (ii) a physical arrangement of the corresponding one of the rechargeable batteries 31, 61, 91. The physical arrangement of each of the rechargeable batteries 31, 61, 91 includes, for example, (i) a position of the corresponding one of the rechargeable batteries 31, 61, 91 in, for example, a vehicle and (ii) a positional relationships between the corresponding one of the rechargeable batteries 31, 61, 91 and another device. The physical arrangement of each of the rechargeable batteries 31, 61, 91 are, for example, stored in the storage device of the ECU 16. The situation of each of the rechargeable batteries 31, 61, 91 includes, for example, an energization schedule of the corresponding one of the rechargeable batteries 31, 61, 91. The energization schedule of each of the rechargeable batteries 31, 61, 91 is, for example, the next charging timing or the next discharging timing of the corresponding one of the rechargeable batteries 31, 61, 91, and the energization schedule of each of the rechargeable batteries 31, 61, 91 can be received, i.e., acquired, from the ECU 16 or can be predicted, i.e., acquired, from the state of, for example, a vehicle.

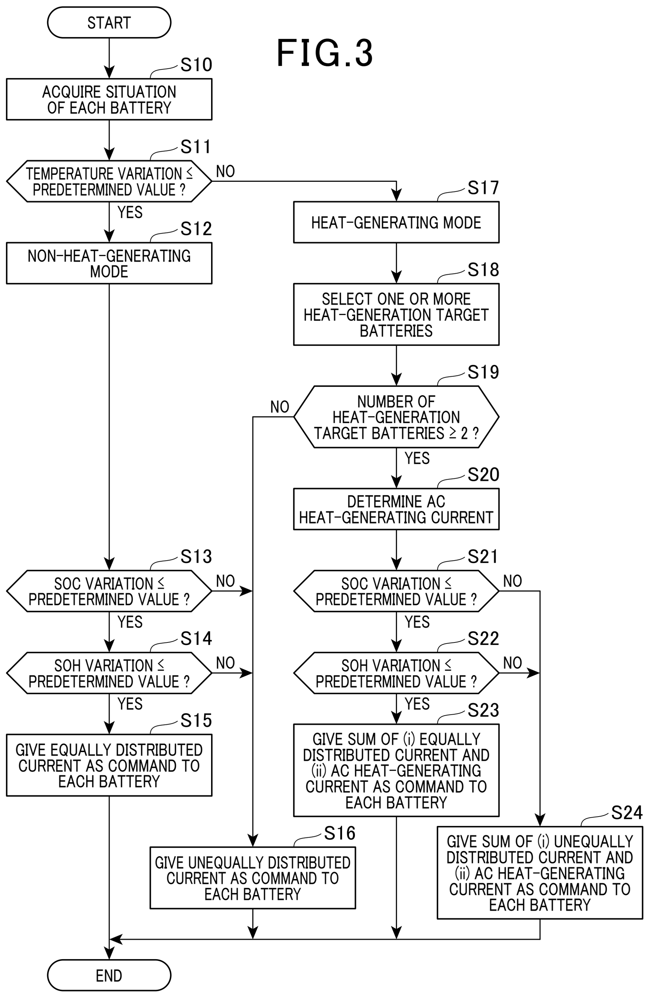

Fig. 3 is a flowchart illustrating the routine of processes that implement the energization operation and the temperature-raising operation. The ECU 16 is configured to repeatedly execute the series of the processes at prescribed intervals. The energization operation includes the discharging operation and the charging operation of the rechargeable batteries 31, 61, 91, but the discharging operation is mainly described herein as an example.

First, the ECU 16 acquires the situation of each of the rechargeable batteries 31, 61, 91 (S10). The situation of each of the rechargeable batteries 31, 61, 91 includes the temperature, the characteristics, the SOC [%], the SOH [%], the physical arrangement, the energization schedule, and the like thereof.

Next, the ECU 16 determines, based on the acquired temperature of each of the rechargeable batteries 31, 61, 91, whether the temperature variation between the rechargeable batteries 31, 61, 91 is a predetermined value or less (S11). For example, the ECU 16 determines whether the absolute difference between the temperature of the highest-temperature rechargeable battery and the temperature of the lowest-temperature rechargeable battery among the rechargeable batteries 31, 61, 91 is the predetermined value or less. The upper-limit value of power (permissible power) of each rechargeable battery 31, 61, 91, which serves as an energization restriction thereof, decreases as the temperature of the corresponding rechargeable battery 31, 61, 91 decreases. The predetermined value is therefore set to, for example, a value that enables the ECU 16 to determine whether the absolute difference in permissible power between the rechargeable batteries is undesirably large. In this determination, when the temperature variation between the rechargeable batteries 31, 61, 91 is determined to be the predetermined value or less (S11: YES), the ECU 16 sets its control mode to a non-heat-generating mode (S12). The non-heat-generating mode is the control mode of executing the energization operation but not executing the temperature-raising operation.

Next, the ECU 16 determines, based on the acquired SOC [%] of each of the rechargeable batteries 31, 61, 91, whether the SOC variation between the rechargeable batteries 31, 61, 91 is a predetermined value or less (S13). For example, the ECU 16 determines whether the absolute difference between the SOC [%] of the highest-SOC [%] rechargeable battery and the SOC [%] of the lowest-SOC [%] rechargeable battery among the rechargeable batteries 31, 61, 91 is the predetermined value or less. When the absolute difference between the output voltages Vb of the rechargeable batteries 31, 61, 91 is excessively large, it is difficult to adjust the conversion circuits 40, 70, 100 to match the output voltages Vm of the rechargeable battery modules 30, 60, 90 with each other. The predetermined value is therefore set to, for example, a value that enables the ECU 16 to determine whether the absolute difference between the output voltages Vb of the rechargeable batteries 31, 61, 91 is excessively large. In this determination, when the SOC variation between the rechargeable batteries 31, 61, 91 is determined to be the predetermined value or less (S13: YES), the routine proceeds to step S14.

In step S14, the ECU 16 determines, based on the acquired SOH [%] of each of the rechargeable batteries 31, 61, 91, whether the SOH variation between the rechargeable batteries 31, 61, 91 is a predetermined value or less. For example, the ECU 16 determines whether the absolute difference between the SOH [%] of the highest-SOH [%] rechargeable battery and the SOH [%] of the lowest-SOH [%] rechargeable battery among the rechargeable batteries 31, 61, 91 is the predetermined value or less. The SOH [%] of each of the rechargeable batteries 31, 61, 91 correlates with the degree of degradation of the corresponding one of the rechargeable batteries 31, 61, 91, and consequently correlates with the life of the corresponding one of the rechargeable batteries 31, 61, 91. The predetermined value is therefore set to, for example, a value that enables the ECU 16 to determine whether the absolute difference in degree of degradation between the rechargeable batteries 31, 61, 91 is undesirably large. In this determination, when the SOH variation between the rechargeable batteries 31, 61, 91 is determined to be the predetermined value or less (S14: YES), the routine proceeds to step S15.

In step S15, the ECU 16 equally distributes a load current, i.e., a discharging current or a charging current, required between the rechargeable batteries and the load 21 into an equally distributed current, and gives the equally distributed current for each of the rechargeable battery modules 30, 60, 90 as a current command value to the corresponding one of the rechargeable battery modules 30, 60, 90. In step S15, when determining that the current command value for each of the rechargeable battery modules 30, 60, 90 exceeds a DC power Win/Wout restriction illustrated in Fig. 5, the ECU 16 corrects the current command value for each of the rechargeable battery modules 30, 60, 90 to be within the DC power Win/Wout restriction.

For example, the upper-limit value of DC power, which serves as the DC power Win/Wout restriction during discharging of each of the rechargeable batteries 31, 61, 91, increases as the temperature of the corresponding one of the rechargeable batteries 31, 61, 91 increases up to the upper limit of an appropriate temperature range of the corresponding one of the rechargeable batteries 31, 61, 91. Additionally, the upper-limit value of DC input power Win of each of the rechargeable batteries 31, 61, 91 decreases and the upper-limit value of DC output power Wout increases as the SOC [%] of the corresponding one of the rechargeable batteries 31, 61, 91 increases. Then, the ECU 16 controls each of the conversion circuits 40, 70, 100 of the rechargeable battery modules 30, 60, 90 to thereby cause the energization current between each of the rechargeable battery modules 30, 60, 90 and the load 21 to become the current command value. Thereafter, the ECU 16 temporarily terminates the routine (END).

Otherwise, when the SOC variation between the rechargeable batteries 31, 61, 91 is determined not to be the predetermined value or less (S13: NO) or when the SOH variation between the rechargeable batteries 31, 61, 91 is determined not to be the predetermined value or less (S14: NO), the routine proceeds to step S16.

In step S16, the ECU 16 unequally distributes the load current, i.e., the discharging current or the charging current, required between the rechargeable batteries and the load 21 into an unequally distributed current, and gives the unequally distributed current for each of the rechargeable battery modules 30, 60, 90, and gives the unequally distributed current for each of the rechargeable battery modules 30, 60, 90 as the current command value to the corresponding one of the rechargeable battery modules 30, 60, 90.

Specifically, when the SOC variation between the rechargeable batteries 31, 61, 91 is not the predetermined value or less (S13: NO), the ECU 16 sets the unequally distributed values for the respective rechargeable batteries 31, 61, 91 so as to reduce the differences between the SOCs [%] of the rechargeable batteries 31, 61, 91.

For example, when the rechargeable batteries 31, 61, 91 discharge power to the load 21, the ECU 16 increases the unequally distributed value for any rechargeable battery as the SOC [%] of the rechargeable battery becomes higher. When the rechargeable batteries 31, 61, 91 is charged from the load 21, the ECU 16 increases the unequally distributed value for any rechargeable battery as the SOC [%] of the rechargeable battery becomes lower.

That is, the ECU 16 adjusts the power ratio among the rechargeable batteries 31, 61, 91 during the energization operation so as to reduce the difference between the SOCs [%] of the rechargeable batteries 31, 61, 91 based on the acquired SOC [%] of each of the rechargeable batteries 31, 61, 91.

Additionally, when the SOH variation between the rechargeable batteries 31, 61, 91 is not the predetermined value or less (S14: NO), the ECU 16 increases the unequally distributed value for any rechargeable battery as the SOH [%] of the rechargeable battery becomes higher during the energization operation, i.e., the charging operation or the discharging operation.

When the current command value for each of the rechargeable battery modules 30, 60, 90 exceeds the DC power Win/Wout restriction illustrated in Fig. 5, the ECU 16 corrects the current command value for each of the rechargeable battery modules 30, 60, 90 to be within the DC power Win/Wout restriction. Then, the ECU 16 controls each of the conversion circuits 40, 70, 100 of the rechargeable battery modules 30, 60, 90 to thereby cause the energization current between each of the rechargeable battery modules 30, 60, 90 and the load 21 to become the corresponding current command value. Thereafter, the ECU 16 temporarily terminates the routine (END).

Otherwise, when the temperature variation between the rechargeable batteries 31, 61, 91 is determined not to be the predetermined value or less (S11: NO), the ECU 16 sets its control mode to a heat-generating mode (S17). The heat-generating mode is the control mode of executing the energization operation and the temperature-raising operation.

Following the process in step S17, the ECU 16 selects, from the rechargeable batteries 31, 61, 91, one or more rechargeable batteries as one or more heat-generation target batteries in step S18. The one or more heat-generation target batteries are target batteries to be subjected to the temperature-raising operation.

For example, the ECU 16 regards the temperature of the rechargeable battery having the highest temperature among the rechargeable batteries 31, 61, 91 as a reference temperature. Then, the ECU 16 selects, from the rechargeable batteries 31, 61, 91, one or more rechargeable batteries when the difference between the temperature of each of the selected one or more rechargeable batteries and the reference temperature is more than a predetermined threshold. Next, the ECU 16 determines the selected one or more rechargeable batteries as the one or more heat-generation target batteries.

Following the process in step S18, the ECU 16 determines whether the number of the one or more heat-generation target batteries is 2 or more (S19).

When the number of the one or more heat-generation target batteries is determined not to be 2 or more (S19: NO), the routine proceeds to step S16. In step S16, the ECU 16 sets the unequally distributed value distributed to the rechargeable battery module corresponding to the heat-generation target battery to be higher than the unequally distributed values distributed to the other rechargeable battery modules. That is, the process in each of steps S11, S18, and S16 adjusts the power ratio between the rechargeable batteries 31, 61, 91 in the energization operation based on the acquired temperature of each of the rechargeable batteries 31, 61, 91.

Otherwise, when the number of the one or more heat-generation target batteries is determined to be 2 or more (S19: YES), the ECU 16 determines an AC heat-generating current for each of the heat-generation target batteries (S20).

Specifically, the ECU 16 calculates the required amount of heat to be generated based on the difference between the reference temperature and each of the heat-generation target batteries. Then, the ECU 16 calculates, based on the required amount of heat to be generated, the AC heat-generating current for each of the heat-generation target batteries.

For example, let us assume that the number of the heat-generation target batteries is 2. In this assumption, the ECU 16 executes AC-current exchange between the two heat-generation target batteries, and determines a maximum current value tolerated by the rechargeable battery modules corresponding to the two heat-generation target batteries. The maximum current value tolerated by the rechargeable battery modules corresponding to the two heat-generation target batteries is the smaller of (i) the maximum current value that can be input to and output from the conversion circuits corresponding to the two heat-generation target batteries and (ii) the maximum current value that can be input to and output from the two heat-generation target batteries.

Next, the ECU 16 calculates an internal resistance value required to satisfy the required amount of heat to be generated using the determined maximum current value.

In accordance with the internal resistance value, the ECU 16 refers to the graph of "INTERNAL RESISTANCE-FREQUENCY" illustrated in Fig. 4 to thereby select an AC current frequency that is capable of satisfying the obtained internal resistance value.

After determination of the AC current frequency, the ECU 16 refers to the graph of "AMOUNT OF GENERATED HEAT-CURRENT AMPLITUDE" illustrated in Fig. 5 to thereby select an AC current amplitude corresponding to the required amount of heat to be generated.

After determination of the AC current frequency and the AC current amplitude, the ECU 16 checks whether the required amount of heat to be generated is within the AC power Win/Wout restriction as the characteristics of the rechargeable batteries in the graph of "AMOUNT OF GENERATED HEAT-CURRENT AMPLITUDE" illustrated in Fig. 5.

For example, the AC power Win/Wout restriction of the rechargeable batteries 31, 61, 91 increase as the temperature of the rechargeable batteries 31, 61, 91 becomes higher up to the upper limit of the appropriate temperature range. In addition, as the SOC [%] of the rechargeable batteries 31, 61, 91 becomes higher, the upper limit of the AC power Win decreases, whereas the upper limit of the AC power Wout increases.

If the required amount of heat to be generated (and/or a corresponding current amplitude) is outside the AC power Win/Wout restriction, the selected AC current frequency and the AC current amplitude may be corrected/adjusted so as to satisfy the AC power Win/Wout restriction, for example, by increasing the AC current frequency (i.e., using a frequency at which the internal resistance of the rechargeable battery is smaller) and/or by reducing the current amplitude. In this manner, the ECU 16 determines, based on the determined AC current frequency and the AC current amplitude, an AC heat-generating current.

When the number of the heat-generation target batteries is 3, the ECU 16 executes AC-current exchange among the three heat-generation target batteries. When the number of the heat-generation target batteries is 4, the ECU 16 may execute AC-current exchange among the four heat-generation target batteries or execute AC-current exchange between a first pair of two heat-generation target batteries and a second pair of two heat-generation target batteries in the four heat-generation target batteries. The ECU 16 determines the AC heat-generating current of the rechargeable battery other than the heat-generation target batteries to be 0.

The processes of S21 and S22 are identical to the respective processes of S13 and S14.

When the SOH variation between the rechargeable batteries 31, 61, 91 is determined to be the predetermined value or less (S22: YES), the routine proceeds to step S23.

In step S23, the ECU 16 equally distributes the load current, i.e., the discharging current or the charging current, required between the rechargeable batteries and the load 21 into an equally distributed current. Then, the ECU 16 adds, to the equally distributed current, the AC heat-generating current to thereby generate an added current as the current command value for each of the rechargeable battery modules 30, 60, 90. Next, in step S23, the ECU 16 controls each of the conversion circuits 40, 70, 100 of the rechargeable battery modules 30, 60, 90 to thereby cause the energization current between each of the rechargeable battery modules 30, 60, 90 and the load 21 to become the corresponding current command value. Thereafter, the ECU 16 temporarily terminates the routine (END).

Otherwise, when the SOC variation between the rechargeable batteries 31, 61, 91 is determined not to be the predetermined value or less (S21: NO) or when the SOH variation between the rechargeable batteries 31, 61, 91 is determined not to be the predetermined value or less (S22: NO), the routine proceeds to step S24.

In step S24, the ECU 16 unequally distributes, like the process in step S16, the load current, i.e., the discharging current or the charging current, required between the rechargeable batteries and the load 21 into an unequally distributed current for each of the rechargeable battery modules 30, 60, 90. Then, the ECU 16 adds, to the unequally distributed current for each of the rechargeable battery modules 30, 60, 90, the AC heat-generating current to thereby generate an added current as the current command value for each of the rechargeable battery modules 30, 60, 90. Next, in step S24, the ECU 16 controls each of the conversion circuits 40, 70, 100 of the rechargeable battery modules 30, 60, 90 to thereby cause the energization current between each of the rechargeable battery modules 30, 60, 90 and the load 21 to become the corresponding current command value. Thereafter, the ECU 16 temporarily terminates the routine (END).

The process in step S10 corresponds to the process of the situation acquisition section 16e, the processes in steps S15, S16, S23, and S24 correspond to the processes of the energization execution section, and the processes in steps S23 and S24 correspond to the processes of the temperature-raising execution section.

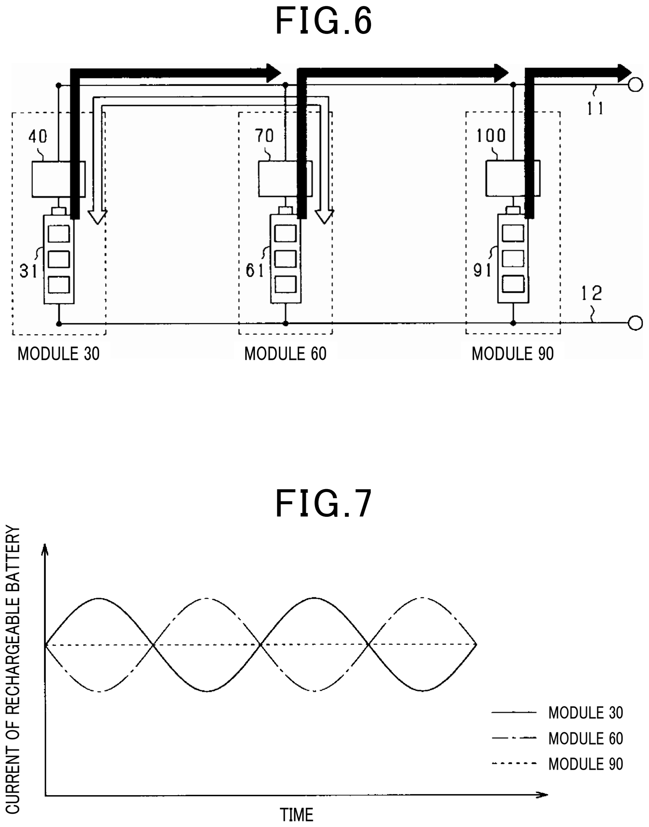

Fig. 6 is a schematic diagram illustrating an example of execution of the discharging operation (energization operation) and the temperature-raising operation. In Fig. 6, the black solid arrows represent currents generated by the discharging operation, and the white arrows represent currents generated by the temperature-raising operation. The same applies to the following diagrams.

The third rechargeable battery module 90 executes only the discharging operation, and the rechargeable battery modules 30, 60 execute the discharging operation and the temperature-raising operation. In detail, the equally distributed value is commanded as the current command value to the rechargeable battery module 90 (AC heat-generating current = 0), and a current obtained by adding the AC heat-generating current to the equally distributed value is commanded as the current command value to each of the rechargeable battery modules 30, 60.

In this case, the currents illustrated in Fig. 7 respectively flow through the rechargeable batteries 31, 61, 91 of the rechargeable battery modules 30, 60, 90.

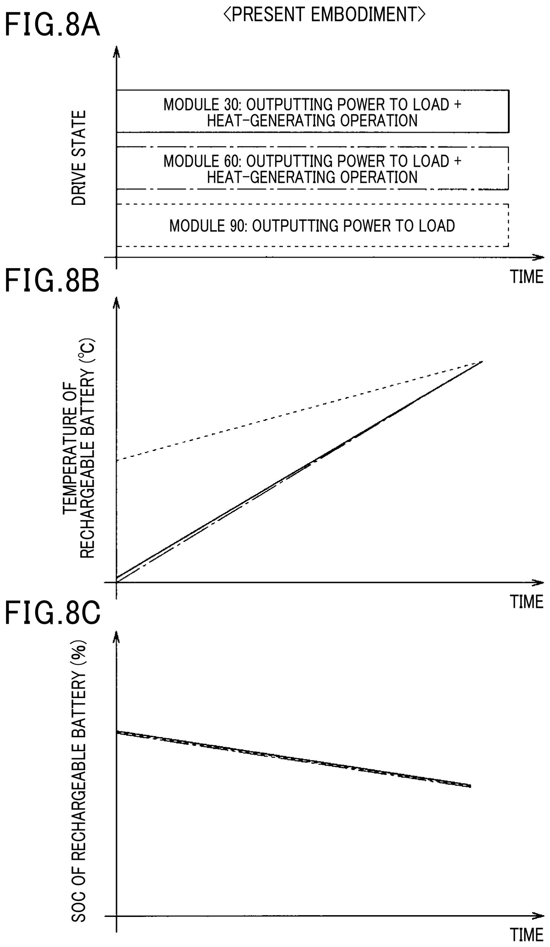

Figs. 8A to 8C are a joint timing chart illustrating (i) the transition of the driving state of each of the rechargeable battery modules 30, 60, 90, (ii) the transition of the temperature of each of the rechargeable batteries, and (iii) the SOC [%] of each of the rechargeable batteries in the case of Figs. 6 and 7.

As illustrated in Fig. 8B, the temperature of the first rechargeable battery 31 represented by a solid line and the temperature of the second rechargeable battery 61 represented by a dot-dashed line rises more sharply than the temperature of the third rechargeable battery 91 represented by a dotted line. As illustrated in Fig. 8C, the SOCs [%] of the rechargeable batteries 31, 61, 91 are equally decreased, and the SOC variation is maintained small. As a result, all the remaining capacities of the rechargeable batteries 31, 61, 91 are easily used up.

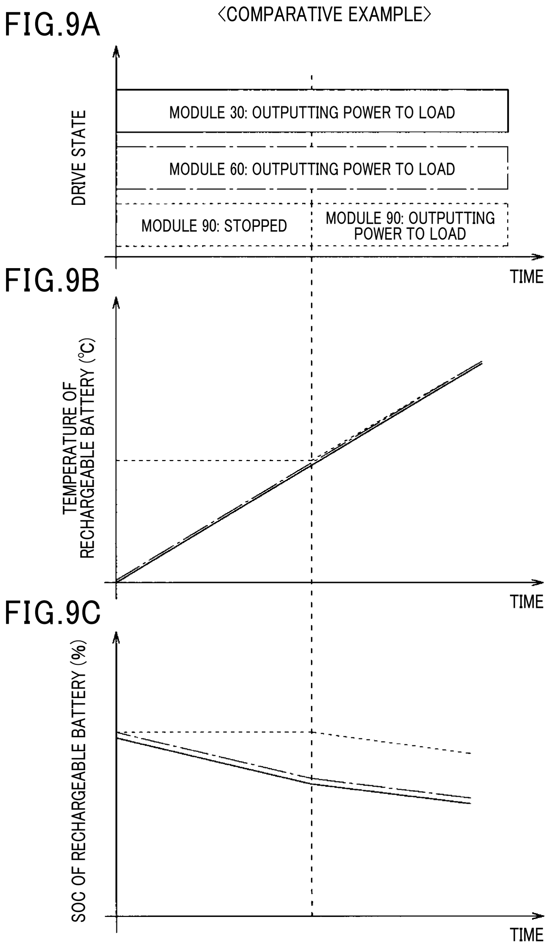

Figs. 9A to 9C are a joint timing chart illustrating (i) the transition of the driving state of each of the rechargeable battery modules 30, 60, 90, (ii) the transition of the temperature of each of the rechargeable batteries, and (iii) the SOC [%] of each of the rechargeable batteries in a comparative example.

In the comparative example, as illustrated in Fig. 9A, the third rechargeable battery module 90 is deactivated at the beginning, and the rechargeable battery modules 30, 60 is activated to discharge power to the load 21. This results in, as illustrated in Fig. 9B, the temperature of the first rechargeable battery 31 represented by a solid line and the temperature of the second rechargeable battery 61 represented by a dot-dashed line rising, whereas the temperature of the third rechargeable battery 91 represented by a dotted line is constant. In this situation, as illustrated in Fig. 9C, the SOCs [%] of the rechargeable batteries 31, 61 are decreased but the SOC [%] of the third rechargeable battery 91 remains unchanged, resulting in the SOC variation expanding. Thereafter, when the temperatures of the rechargeable batteries 31, 61 become equal to the temperature of the third rechargeable battery 91 as illustrated in Fig. 9B, the third rechargeable battery module 90 is activated to discharge power to the load 21 as illustrated in Fig. 9A. This results in the temperatures of the rechargeable batteries 31, 61, 91 equally rising, but the SOC variation remains expanded as illustrated in Fig. 9C.

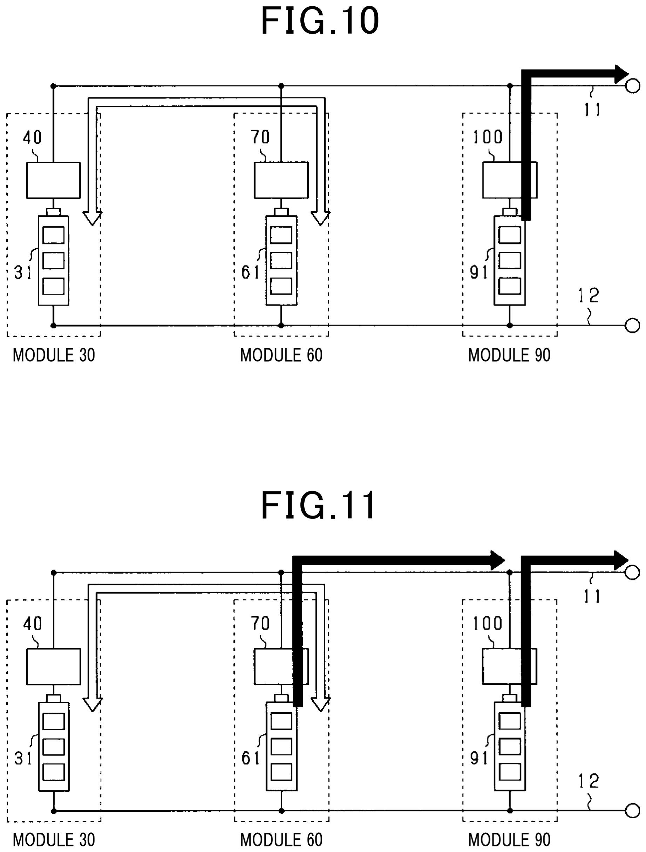

Fig. 10 is a schematic diagram illustrating another example of execution of the energization operation and the temperature-raising operation.

The rechargeable battery modules 30, 60 execute only the temperature-raising operation, and the third rechargeable battery module 90 executes only the discharging operation. For example, when only the third rechargeable battery 91 has a temperature enabling the third rechargeable battery 91 to discharge power to the load 21 and thus executes discharging, and the temperature of the third rechargeable battery 91 becomes higher than the temperatures of the rechargeable batteries 31, 61 by the specified value or more, the operations illustrated in Fig. 10 are executed.

The present embodiment described above in detail has the following advantageous benefits.

The positive electrode and the negative electrode of each of the rechargeable battery 31, 61, 91 are connected to the paired primary-side terminals 41, 42, 71, 72, 101, 102 of the corresponding one of the conversion circuit 40, 70, 100, and each of the rechargeable batteries 31, 61, 91 is connected in series to the paired secondary-side terminals 47, 48, 77, 78, 107, 108 of the corresponding one of the conversion circuit 40, 70, 100.

This configuration enables the voltage obtained by summing up the output voltage Vb of each of the rechargeable batteries 31, 61, 91 and the output voltage Vo of the corresponding one of the conversion circuits 40, 70, 100 to become the output voltage Vm of the corresponding one of the rechargeable battery modules 30, 60, 90. Therefore, compared with a rechargeable battery module in which the rechargeable battery 31, 61, 91 is connected in parallel with the pair of secondary-side terminals 47, 48, 77, 78, 107, 108 of the conversion circuit 40, 70, 100, it is possible to lower the output voltage Vo required for each conversion circuit 40, 70, 100 when the output voltage Vm is required for the corresponding rechargeable battery module 30, 60, 90. Accordingly, the rated voltage of each conversion circuit 40, 70, 100 can be lowered, thus enabling the reduction in rated capacity of each conversion circuit 40, 70, 100, and it is therefore possible to reduce the sizse of each conversion circuit 40, 70, 100.

The energization execution section 16c controls each of the conversion circuits 40, 70, 100 of the rechargeable battery modules 30, 60, 90, and thereby executes the energization operation between the rechargeable batteries 31, 61, 91 and the load 21. This makes it possible to raise the temperature of the rechargeable batteries 31, 61, 91 through heat generation associated with the energization operation.

The temperature-raising execution section 16d controls each of the conversion circuits 40, 70, 100 of the rechargeable battery modules 30, 60, 90, and thereby executes the temperature-raising operation for performing charging/discharging between the rechargeable batteries 31, 61, 91 and thus raising the temperatures of the rechargeable batteries 31, 61, 91. Therefore, apart from raising the temperature of each rechargeable battery 31, 61, 91 by the energization operation executed between the corresponding rechargeable battery 31, 61, 91 and the load 21, it is possible to raise the temperatures of the rechargeable batteries for which the temperature-raising operation has been executed.

Further, the power supply system 10 simultaneously executes the energization operation by the energization execution section 16c and the temperature-raising operation by the temperature-raising execution section 16d. Accordingly, the temperatures of the rechargeable batteries 31, 61, 91 can be flexibly adjusted while energization is performed between the rechargeable batteries 31, 61, 91 and the load 21. In particular, for example, during the rechargeable batteries 31, 61, 91 discharging power to the load 21, the temperatures of the rechargeable batteries 31, 61, 91 can be equalized or raised rapidly.

The energization execution section 16c adjusts the power ratio among the rechargeable batteries 31, 61, 91 in the energization operation based on the states of the rechargeable batteries 31, 61, 91 acquired by the BMUs 32, 62, 92. In this configuration, the power ratio among the rechargeable batteries 31, 61, 91 in the energization operation is adjusted based on the states of the rechargeable batteries 31, 61, 91, and therefore, the temperatures of the rechargeable batteries 31, 61, 91 can be further flexibly adjusted through the energization operation by the energization execution section 16c.

The energization execution section 16c adjusts the power ratio among the rechargeable batteries 31, 61, 91 in the energization operation so as to reduce the difference between the SOCs [%] of the rechargeable batteries 31, 61, 91 acquired by the BMUs 32, 62, 92. In this configuration, not only is the energization performed between the rechargeable batteries 31, 61, 91 and the load 21 through the energization operation by the energization execution section 16c, but also the difference between the SOCs [%] of the rechargeable batteries 31, 61, 91 can be reduced.

The energization execution section 16c sets the power ratio among the rechargeable batteries in the energization operation such that a rechargeable battery having a higher SOH [%] has a higher power level than the other rechargeable batteries.

In this configuration, not only is the energization performed between the rechargeable batteries 31, 61, 91 and the load 21 through the energization operation by the energization execution section 16c, but also the difference between the SOHs [%] of the rechargeable batteries 31, 61, 91 can be reduced. That is, by increasing the energization power in the energization operation, the higher the SOH [%] of the rechargeable battery is, the difference in SOH [%] from the other rechargeable batteries can be reduced.

The temperature-raising execution section 16d determines the rechargeable battery to be subjected to heat generation based on the situation of the rechargeable batteries 31, 61, 91 acquired by the situation acquisition section 16e. In this configuration, the rechargeable battery to be subjected to heat generation can be appropriately determined based on the situation of the rechargeable batteries 31, 61, 91.

The working effects described above can be exhibited by making the computer execute the control program applied to the power supply system 10.

The embodiment described above can be implemented with the following modifications. Components identical to those of the embodiment are denoted by the identical reference signs and thus not described.

The situation acquisition section 16e may acquire, as the situation of the plurality of rechargeable batteries 31, 61, 91, the states and the energization schedules of the plurality of rechargeable batteries 31, 61, 91, and the temperature-raising execution section 16d may determine the rechargeable battery to be subjected to heat generation based on the states and the energization schedules of the plurality of rechargeable batteries 31, 61, 91 acquired by the situation acquisition section 16e. In this configuration, the rechargeable battery to be subjected to heat generation can be appropriately determined in consideration of the states and the energization schedules of the plurality of rechargeable batteries 31, 61, 91.

In Fig. 11, the first rechargeable battery module 30 executes only the temperature-raising operation, the second rechargeable battery module 60 executes the discharging operation and the temperature-raising operation, and the third rechargeable battery module 90 executes only the discharging operation. For example, by determining, as the rechargeable battery to be subjected to heat generation, the first rechargeable battery 31 that is scheduled to execute the operation of discharging power to the load 21 and needs to raise the temperature thereof, the operation of discharging power from the first rechargeable battery 31 to the load 21 can be smoothly started.

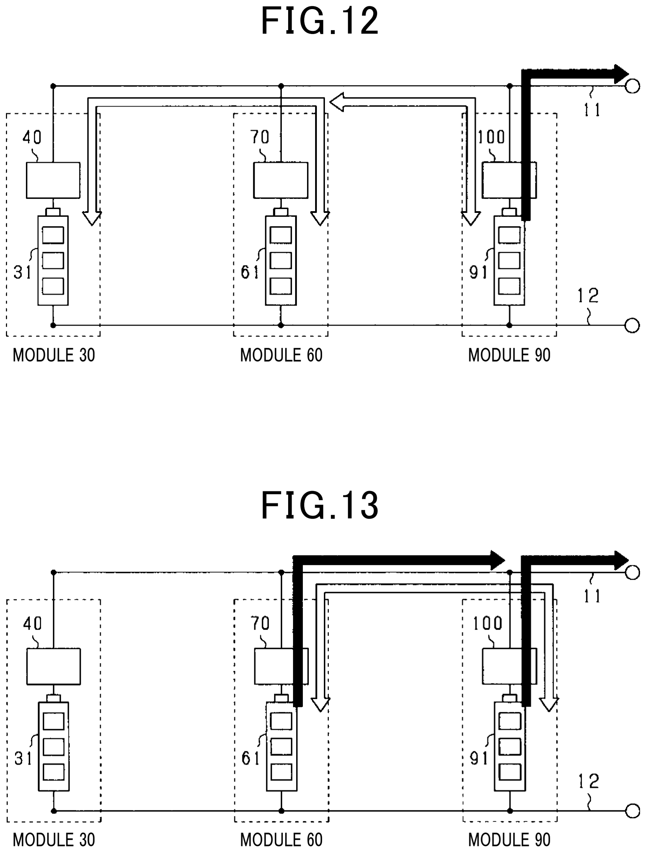

In Fig. 12, the rechargeable battery modules 30, 60 execute only the temperature-raising operation, and the third rechargeable battery module 90 executes the discharging operation and the temperature-raising operation. For example, by determining, as the rechargeable battery to be subjected to heat generation, the rechargeable batteries 31, 61 that are scheduled to execute the operation of discharging power to the load 21 and need to raise the temperatures thereof, the operation of discharging power from the rechargeable batteries 31, 61 to the load 21 can be smoothly started.

The temperature-raising execution section 16d may determine, as the rechargeable battery to be subjected to heat generation, a rechargeable battery having a higher amount of increase in the upper-limit value of power (permissible power) as the Win/Wout energization restriction of the rechargeable battery, the increase occurring between before and after execution of the temperature-raising operation, than the amounts of increase of the other rechargeable batteries.

In Fig. 13, the first rechargeable battery module 30 is deactivated, and the rechargeable battery modules 60, 90 execute the discharging operation and the temperature-raising operation. For example, when the rechargeable batteries 61, 91 have higher amounts of increase in permissible power, the increase occurring between before and after execution of the temperature-raising operation for a prescribed time, than the amount of increase of the first rechargeable battery 31, the operations illustrated in the same diagram are executed. In this configuration, the temperature-raising operation can effectively increase the permissible power of the rechargeable batteries 61, 91, enabling the power supply system 10 to effectively improve the power capability thereof.

The situation acquisition section 16e may acquire, as the situations of the plurality of rechargeable batteries 31, 61, 91, the SOHs [%] of the plurality of rechargeable batteries 31, 61, 91, and the temperature-raising execution section 16d may determine, as the heat-generation target battery, a rechargeable battery having a higher SOH [%] acquired by the situation acquisition section 16e than the SOHs [%] of the other rechargeable batteries.

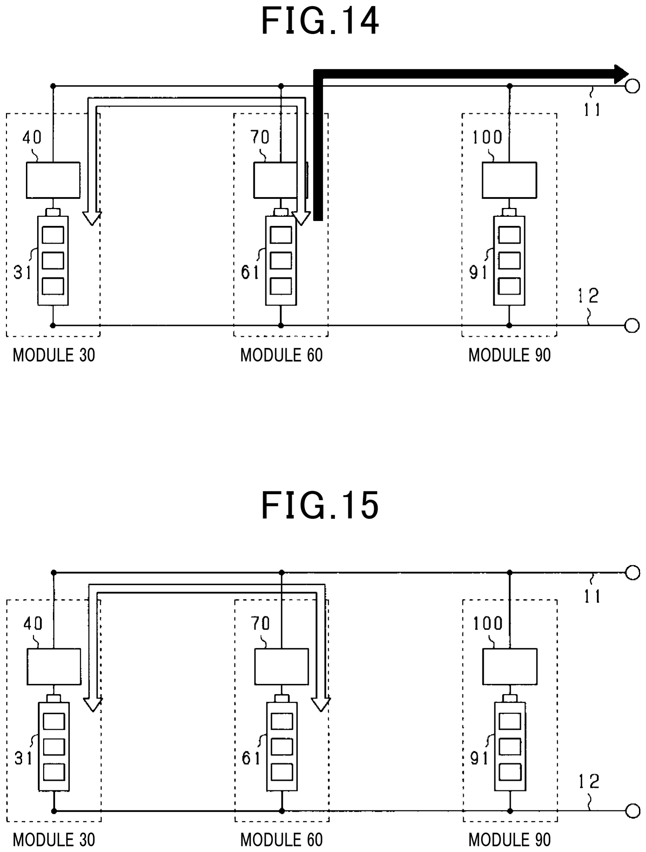

In Fig. 14, the first rechargeable battery module 30 executes only the temperature-raising operation, the second rechargeable battery module 60 executes the discharging operation and the temperature-raising operation, and the third rechargeable battery module 90 is not operating. For example, when the first rechargeable battery 31 has a higher SOH [%] than the SOH [%] of the third rechargeable battery 91, the operations illustrated in the same diagram are executed. In this configuration, not only are the temperatures of the rechargeable batteries 31, 61 raised through the temperature-raising operation by the temperature-raising execution section 16d, but also the difference between the SOHs [%] of the plurality of rechargeable batteries 31, 61, 91 can be reduced. That is, by positively executing the temperature-raising operation for the rechargeable battery having a higher SOH [%] than the SOHs [%] of the other rechargeable batteries, the difference from the SOHs [%] of the other rechargeable batteries can be reduced.

The situation acquisition section 16e may acquire, as the situations of the plurality of rechargeable batteries 31, 61, 91, the physical arrangements of the plurality of rechargeable batteries 31, 61, 91, and the temperature-raising execution section 16d may determine, as the rechargeable battery to be subjected to heat generation, a rechargeable battery that is less likely to receive heat from the surrounding environment than the other rechargeable batteries, or a rechargeable battery from which heat is more likely to be dissipated to the surrounding environment than the other rechargeable batteries, based on the physical arrangements of the plurality of rechargeable batteries 31, 61, 91 acquired by the situation acquisition section 16e.

In Fig. 15, the rechargeable battery modules 30, 60 execute only the temperature-raising operation, and the third rechargeable battery module 90 is deactivated. For example, when the rechargeable batteries 31, 61 are less likely to receive heat from the surrounding environment than the third rechargeable battery 91, the operation illustrated in Fig. 15 is executed. In this configuration, the temperatures of the rechargeable batteries 31, 61 that are less likely to be warmed than the third rechargeable battery 91 or that are more easily cooled than the third rechargeable battery 91 can be raised in advance. Alternatively, when the rechargeable batteries 31, 61 are arranged such that heat is more likely to be dissipated to the surrounding environment than the third rechargeable battery 91, the operation illustrated in the same diagram is executed. In this configuration, the temperatures of the rechargeable batteries 31, 61 that are more easily cooled than the third rechargeable battery 91 can be raised in advance.

The temperature-raising execution section 16d may execute the temperature-raising operation so as to keep the temperature of the rechargeable battery to be subjected to heat generation at a specified temperature or higher, when the ambient temperature is lower than temperatures of the plurality of rechargeable batteries 31, 61, 91. The ambient temperature can be detected by an ambient temperature sensor included in the vehicle. The specified temperature is set to, for example, a temperature at which the rechargeable batteries 31, 61, 91 can exhibit standard power capability.

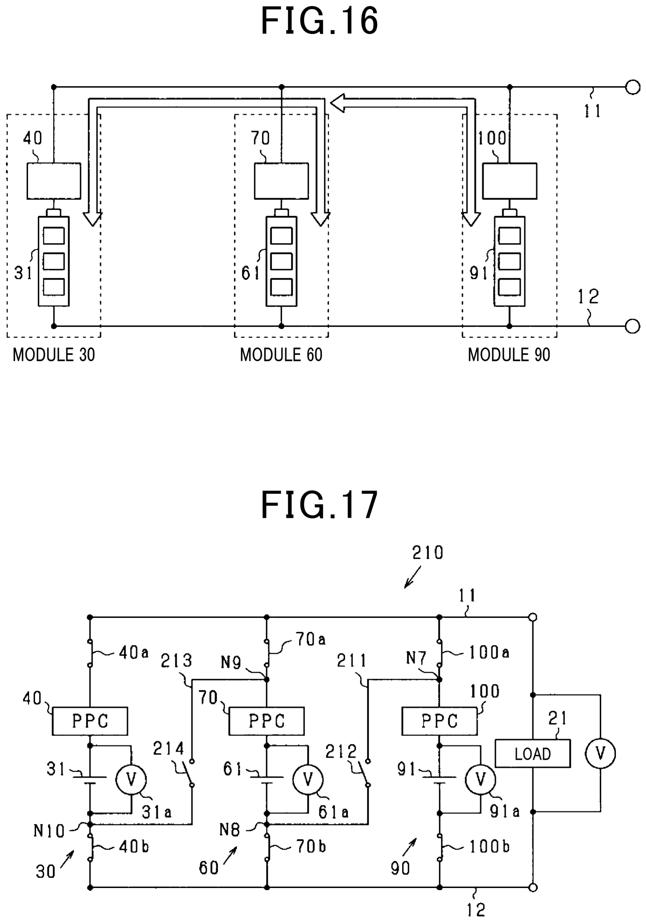

In Fig. 16, the rechargeable battery modules 30, 60, 90 execute only the temperature-raising operation. For example, when the ambient temperature is lower than the temperatures of the rechargeable batteries 31, 61, 91, the operation illustrated in the same diagram is executed. In this configuration, for example, even when the ambient temperature is lower than the temperatures of the plurality of rechargeable batteries 31, 61, 91 after completion of the energization operation executed between the rechargeable battery 31, 61, 91 and the load 21, the temperature-raising operation can keep the temperatures of the rechargeable batteries 31, 61, 91 at the specified temperature or higher. Accordingly, when energization is required of the power supply system 10, energization can be promptly executed according to the energization requirement.

The temperature-raising execution section 16d may increase the SOC [%] of the rechargeable battery determined as the rechargeable battery to be subjected to heat generation to higher than the SOCs [%] of the other rechargeable batteries by the charging operation of the load 21 or the other rechargeable batteries before execution of the temperature-raising operation. In this configuration, even when the SOC [%] of the rechargeable battery to be subjected to heat generation is lowered by the temperature-raising operation, the difference between the SOCs [%] of the plurality of rechargeable batteries 31, 61, 91 can be prevented from increasing.

As illustrated in Fig. 17, a power supply system 210 may include a path 211 connecting a junction N7 between the third conversion circuit 100 and the relay 100a of the third rechargeable battery module 90, with a junction N8 between the second rechargeable battery 61 and the relay 70b of the second rechargeable battery module 60. Further, the power supply system 210 may include a path 213 connecting a junction N9 between the second conversion circuit 70 and the relay 70a of the second rechargeable battery module 60, with a junction N10 between the first rechargeable battery 31 and the relay 40b of the first rechargeable battery module 30. The path 211 is provided with a relay 212 (switch) that opens and closes the path 211. The path 213 is provided with a relay 214 (switch) that opens and closes the path 213. The relays 212, 214 are controlled by the ECU 16. The paths 211, 213 and the relays 212, 214 form a switch circuit.

That is, the power supply system 210 includes three or more rechargeable battery modules (a plurality of rechargeable battery modules), and the switch circuit may switch the three or more rechargeable battery modules between serial connection and parallel connection with respect to the buses 11, 12. Then, when the rechargeable battery modules 30, 60, 90 are switched to parallel connection by the switch circuit, the power can be supplied from the rechargeable battery modules 30, 60, 90 to the buses 11, 12.

Therefore, the rechargeable battery modules 30, 60, 90 can be used as a redundant power source. The ECU 16 can execute the controls described above of the power supply system 10 and the same controls of the modified examples thereof, with the rechargeable battery modules 30, 60, 60 switched to parallel connection by the switch circuit. On the other hand, when the rechargeable battery modules 30, 60, 90 are switched to serial connection by the switch circuit, the voltage obtained by summing up the output voltages Vm1, Vm2, Vm3 of the rechargeable battery modules 30, 60, 90 can be supplied to the buses 11, 12. Therefore, the rechargeable battery modules 30, 60, 90 can be used as a higher-voltage power source.

The number of the rechargeable battery modules included in the power supply system 10, 210 may be 2 or 4 or more.

As the load 21, for example, two or more combinations (a motor unit equipped with an inverter) of an inverter and an MG (Motor Generator) may be connected in parallel to the buses 11, 12. In that case, the number of the rechargeable battery modules connected to the buses 11, 12 may be increased along with the number of the motor units equipped with inverters.

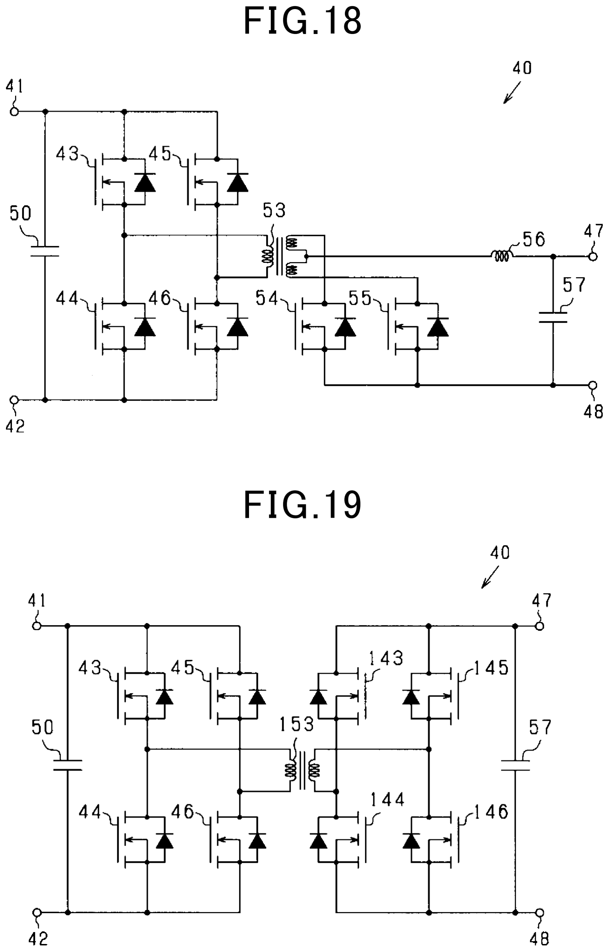

As illustrated in Fig. 18, in the first conversion circuit 40 (conversion circuit), the switching devices 54, 55 in Fig. 2 may be connected between the transformer 53 and the negative terminal 48. Also in this configuration, the same working effects as the first conversion circuit 40 in Fig. 2 can be exhibited. The same applies to the second conversion circuit 70, the third conversion circuit 100, and the like (conversion circuit).

As illustrated in Fig. 19, the first conversion circuit 40 (conversion circuit) may be a known isolated DC-DC converter including a transformer 153, which is not center-tapped, and a secondary-side full-bridge circuit formed of switching devices 143 to 146. The switching devices 143 to 146 are, for example, MOSFETs or IGBTs (Insulated Gate Bipolar Transistors). The switching devices 143 to 146 are controlled by the ECU 16. The same applies to the second conversion circuit 70, the third conversion circuit 100, and the like (conversion circuit).

As the first conversion circuit 40 (conversion circuit), a resonant DC-DC converter can also be employed. Further, as the first conversion circuit 40 (conversion circuit), a non-isolated DC-DC converter such as a buck converter can also be employed. The same applies to the second conversion circuit 70, the third conversion circuit 100, and the like (conversion circuit).

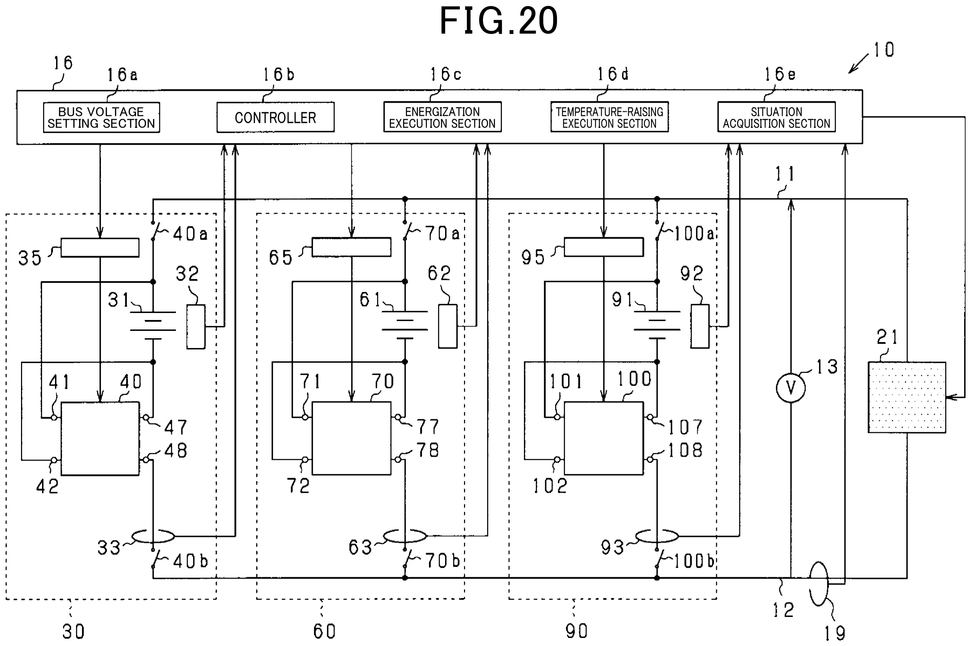

The rechargeable battery modules 30, 60, 90 may be configured as illustrated in Fig. 20. That is, the positive electrode of the first rechargeable battery 31 is connected to the bus 11. The primary-side positive terminal 41 of the first conversion circuit 40 is connected to the positive electrode of the first rechargeable battery 31, and the primary-side negative terminal 42 of the first conversion circuit 40 is connected to the negative electrode of the first rechargeable battery 31. The secondary-side positive terminal 47 of the first conversion circuit 40 is connected to the negative electrode of the first rechargeable battery 31. The secondary-side negative terminal 48 of the first conversion circuit 40 is connected to the bus 12. Also in this case, the positive electrode and the negative electrode of the first rechargeable battery 31 are connected to the pair of primary-side terminals 41, 42, respectively, of the first conversion circuit 40, and the first rechargeable battery 31 is connected in series with the pair of secondary-side terminals 47, 48 of the first conversion circuit 40. Also in this configuration, the same working effects as the embodiment described above can be exhibited. The same applies to the second rechargeable battery module 60, the third rechargeable battery module 90, and the like (rechargeable battery module).

At least one function of the bus voltage setting section 16a, the controller 16b, the energization execution section 16c, the temperature-raising execution section 16d, and the situation acquisition section 16e of the ECU 16 can also be implemented by a power control ECU (Electronic Control Unit) that controls the BMUs 32, 62, 92, the driver circuits 35, 65, 95, and the power of the electric vehicle, or a vehicle control ECU (higher-level ECU) that comprehensively controls the electric vehicle. When the power supply system 10, 210 is used as, for example, a stationary power source, the functions of the bus voltage setting section 16a, the controller 16b, the energization execution section 16c, the temperature-raising execution section 16d, and the situation acquisition section 16e of the ECU 16 can also be implemented by a stationary power source control ECU (control unit) that controls the stationary power source.

The ECU 16 and the method thereof described in the present disclosure may be implemented by a dedicated computer provided so as to include a processor, which has been programmed to execute one or a plurality of functions (commands) embodied by a computer program, and a memory.

Alternatively, the ECU 16 and the method thereof described in the present disclosure may be implemented by a dedicated computer provided so as to include a processor formed of one or more dedicated hardware logic circuits. Alternatively, the ECU 16 and the method thereof described in the present disclosure may be implemented by one or more dedicated computers configured to include a combination of a processor, which has been programmed to execute one or a plurality of functions, and a memory, with a processor formed of one or more hardware logic circuits. The computer program may be, as an instruction to be executed by a computer, stored in a computer-readable non-transitory tangible memory medium.

The embodiment and the modified examples thereof described above can be executed by combinations as far as the combinations are possible.

Hereinafter, characteristic configurations extracted from the embodiment and the modified examples thereof described above are described.

### [First configuration]

The first configuration provides a power supply system (10, 210) in which a plurality of rechargeable battery modules (30, 60, 90) and a load (21) are connected in parallel with a power supply bus (11, 12), each of the plurality of rechargeable battery modules including a rechargeable battery (31, 61, 91) and a conversion circuit (40, 70, 100) that converts power input from the rechargeable battery to paired primary-side terminals (41, 42, 71, 72, 101, 102) of the conversion circuit and outputs converted power from paired secondary-side terminals (47, 48, 77, 78, 107, 108) of the conversion circuit, a positive electrode and a negative electrode of the rechargeable battery of each rechargeable battery module being connected to the paired primary-side terminals, respectively, of the conversion circuit, the rechargeable battery of each rechargeable battery module being connected in series to the paired secondary-side terminals of the conversion circuit. The power supply system includes an energization execution section (16c) configured to control the conversion circuit of each rechargeable battery module to execute an energization operation between the rechargeable batteries and the load, and a temperature-raising execution section (16d) configured to control the conversion circuit of each rechargeable battery module to execute a temperature-raising operation for performing charging/discharging among the rechargeable batteries, thus raising temperatures of the rechargeable batteries. The power supply system is configured to simultaneously execute the energization operation by the energization execution section and the temperature-raising operation by the temperature-raising execution section.

### [Second configuration]

The power supply system of the second configuration, which depends from the first configuration, further includes a state acquisition unit (32, 62, 92) configured to acquire a state of each of the rechargeable batteries. The energization execution section is configured to adjust a power ratio among the rechargeable batteries in the energization operation in accordance with the states of the rechargeable batteries acquired by the state acquisition units.

### [Third configuration]

In the power supply system of the third configuration, which depends from the second configuration, the state acquisition unit is configured to acquire, as the state of each of the rechargeable batteries, a state of charge of each of the rechargeable batteries. The energization execution section is configured to adjust the power ratio among the rechargeable batteries in the energization operation so as to reduce a difference among the states of charge of the rechargeable batteries acquired by the state acquisition units.

### [Fourth configuration]

In the power supply system of the fourth configuration, which depends from the second or third configuration, the state acquisition unit is configured to acquire, as the state of each of the rechargeable batteries, a state of health of each of the rechargeable batteries. The energization execution section is configured to set the power ratio among the rechargeable batteries in the energization operation such that at least one rechargeable battery among the rechargeable batteries, each having a higher value of the state of health acquired by the state acquisition unit than any other rechargeable battery, has a higher power level than any other rechargeable battery.

### [Fifth configuration]

The power supply system of the fifth configuration, which depends from any one of the first to fourth configurations, further includes a condition acquisition section (16e) configured to acquire a situation of each of the rechargeable batteries, the situation of each of the batteries including at least one of the state, a physical arrangement, and an energization schedule of the corresponding one of the rechargeable batteries. The temperature-raising execution section is configured to determine, from the rechargeable batteries, one of the rechargeable batteries as a temperature-rise target battery to be subjected to the temperature-raising operation in accordance with the situations of the rechargeable batteries acquired by the situation acquisition section.

### [Sixth configuration]

In the power supply system of the sixth configuration, which depends from the fifth configuration, the situation acquisition section is configured to acquire, as the situation of each of the rechargeable batteries, the state of health of the corresponding one of the rechargeable batteries. The temperature-raising execution section is configured to select, from the rechargeable batteries, a rechargeable battery as the temperature-rise target battery, the selected rechargeable battery having a higher value of the state of health acquired by the situation acquisition section than any other rechargeable battery.

### [Seventh configuration]

In the power supply system of the seventh configuration, which depends from the fifth configuration, the situation acquisition section is configured to acquire, as the situation of each of the rechargeable batteries, the physical arrangement of the corresponding one of the rechargeable batteries. The temperature-raising execution section is configured to select, from the rechargeable batteries, a rechargeable battery as the temperature-rise target battery in accordance with the physical arrangement of each of the rechargeable batteries. The selected rechargeable battery is less likely to receive heat from a surrounding environment than any other rechargeable battery or is arranged such that heat is more likely to be dissipated to the surrounding environment than any other rechargeable battery.

### [Eighth configuration]

In the power supply system of the eighth configuration, which depends from the seventh configuration, the temperature-raising execution section is configured to execute the temperature-raising operation so as to keep the temperature of the temperature-rise target battery at a specified temperature or higher when an ambient temperature is determined to be lower than the temperatures of the rechargeable batteries.

### [Ninth configuration]

In the power supply system of the ninth configuration, which depends from the fifth configuration, the situation acquisition section is configured to acquire, as the situation of each of the rechargeable batteries, the state and the energization schedule of each of the rechargeable batteries. The temperature-raising execution section is configured to select, from the rechargeable batteries, a rechargeable battery as the temperature-rise target battery in accordance with the state and the energization schedule of each of the rechargeable batteries.

### [Tenth configuration]

In the power supply system of the tenth configuration, which depends from the ninth configuration, the temperature-raising execution section is configured to select, from the rechargeable batteries, the temperature-rise target battery such that the temperature-rise target battery has a higher amount of increase in permissible power than any other rechargeable battery, the increase occurring between before and after execution of the temperature-raising operation.

### [Eleventh configuration]

In the power supply system of the eleventh configuration, which depends from any one of the fifth to tenth configurations, the temperature-raising execution section is configured to increase the state of charge of the temperature-rise target battery to be higher than the state of charge of any other rechargeable battery using a charging operation from the load or any other rechargeable battery before execution of the temperature-raising operation.

The present disclosure has been described in accordance with the examples, but is to be understood not to be limited to the examples and the structures thereof. The present disclosure embraces various modified examples and modifications within the range of equivalency. Further, various combinations and forms, and other combinations and forms including only one more element, or more or less than one element in addition thereto are also within the spirit and scope of the present disclosure.

## Claims

1. A power supply system (10, 210) in which a plurality of rechargeable battery modules (30, 60, 90) and a load (21) are connected in parallel with a power supply bus (11, 12), each of the plurality of rechargeable battery modules including a rechargeable battery (31, 61, 91) and a conversion circuit (40, 70, 100) that converts power input from the rechargeable battery to paired primary-side terminals (41, 42, 71, 72, 101, 102) of the conversion circuit and outputs converted power from paired secondary-side terminals (47, 48, 77, 78, 107, 108) of the conversion circuit, a positive electrode and a negative electrode of the rechargeable battery of each rechargeable battery module being connected to the paired primary-side terminals, respectively, of the conversion circuit, the rechargeable battery of each rechargeable battery module being connected in series to the paired secondary-side terminals of the conversion circuit, the power supply system comprising:
an energization execution section (16c) configured to control the conversion circuit of each rechargeable battery module to execute an energization operation between the rechargeable batteries and the load; and
a temperature-raising execution section (16d) configured to control the conversion circuit of each rechargeable battery module to execute a temperature-raising operation for performing charging/discharging among the rechargeable batteries, thus raising temperatures of the rechargeable batteries, wherein:
the power supply system is configured to simultaneously execute the energization operation by the energization execution section and the temperature-raising operation by the temperature-raising execution section.

2. The power supply system according to claim 1, further comprising:
a state acquisition unit (32, 62, 92) configured to acquire a state of each of the rechargeable batteries, wherein:
the energization execution section is configured to adjust a power ratio among the rechargeable batteries in the energization operation in accordance with the states of the rechargeable batteries acquired by the state acquisition units.

3. The power supply system according to claim 2, wherein:
the state acquisition unit is configured to acquire, as the state of each of the rechargeable batteries, a state of charge of each of the rechargeable batteries, and
the energization execution section is configured to adjust the power ratio among the rechargeable batteries in the energization operation so as to reduce a difference among the states of charge of the rechargeable batteries acquired by the state acquisition units.

4. The power supply system according to claim 2 or 3, wherein:
the state acquisition unit is configured to acquire, as the state of each of the rechargeable batteries, a state of health of each of the rechargeable batteries; and
the energization execution section is configured to set the power ratio among the rechargeable batteries in the energization operation such that:
at least one rechargeable battery among the rechargeable batteries, each having a higher value of the state of health acquired by the state acquisition unit than any other rechargeable battery, has a higher power level than any other rechargeable battery.

5. The power supply system according to any one of claims 1 to 3, further comprising:
a condition acquisition section (16e) configured to acquire a situation of each of the rechargeable batteries, the situation of each of the batteries including at least one of the state, a physical arrangement, and an energization schedule of the corresponding one of the rechargeable batteries, wherein:
the temperature-raising execution section is configured to determine, from the rechargeable batteries, one of the rechargeable batteries as a temperature-rise target battery to be subjected to the temperature-raising operation in accordance with the situations of the rechargeable batteries acquired by the situation acquisition section.

6. The power supply system according to claim 5, wherein:
the situation acquisition section is configured to acquire, as the situation of each of the rechargeable batteries, the state of health of the corresponding one of the rechargeable batteries; and
the temperature-raising execution section is configured to select, from the rechargeable batteries, a rechargeable battery as the temperature-rise target battery, the selected rechargeable battery having a higher value of the state of health acquired by the situation acquisition section than any other rechargeable battery.

7. The power supply system according to claim 5, wherein:
the situation acquisition section is configured to acquire, as the situation of each of the rechargeable batteries, the physical arrangement of the corresponding one of the rechargeable batteries; and
the temperature-raising execution section is configured to select, from the rechargeable batteries, a rechargeable battery as the temperature-rise target battery in accordance with the physical arrangement of each of the rechargeable batteries,
the selected rechargeable battery being less likely to receive heat from a surrounding environment than any other rechargeable battery or being arranged such that heat is more likely to be dissipated to the surrounding environment than any other rechargeable battery.

8. The power supply system according to claim 7, wherein:
the temperature-raising execution section is configured to execute the temperature-raising operation so as to keep the temperature of the temperature-rise target battery at a specified temperature or higher when an ambient temperature is determined to be lower than the temperatures of the rechargeable batteries.

9. The power supply system according to claim 5, wherein:
the situation acquisition section is configured to acquire, as the situation of each of the rechargeable batteries, the state and the energization schedule of each of the rechargeable batteries, and
the temperature-raising execution section is configured to select, from the rechargeable batteries, a rechargeable battery as the temperature-rise target battery in accordance with the state and the energization schedule of each of the rechargeable batteries.

10. The power supply system according to claim 9, wherein:
the temperature-raising execution section is configured to select, from the rechargeable batteries, the temperature-rise target battery such that the temperature-rise target battery has a higher amount of increase in permissible power than any other rechargeable battery, the increase occurring between before and after execution of the temperature-raising operation.

11. The power supply system according to claim 5, wherein:
the temperature-raising execution section is configured to increase the state of charge of the temperature-rise target battery to be higher than the state of charge of any other rechargeable battery using a charging operation from the load or any other rechargeable battery before execution of the temperature-raising operation.

12. A control apparatus (16) to be applied to a power supply system (10, 210) in which a plurality of rechargeable battery modules (30, 60, 90) and a load (21) are connected in parallel with a power supply bus (11, 12), each of the plurality of rechargeable battery modules including a rechargeable battery (31, 61, 91) and a conversion circuit (40, 70, 100) that converts power input from the rechargeable battery to paired primary-side terminals (41, 42, 71, 72, 101, 102) of the conversion circuit and outputs converted power from paired secondary-side terminals (47, 48, 77, 78, 107, 108) of the conversion circuit, a positive electrode and a negative electrode of the rechargeable battery of each rechargeable battery module being connected to the paired primary-side terminals, respectively, of the conversion circuit, the rechargeable battery of each rechargeable battery module being connected in series to the paired secondary-side terminals of the conversion circuit, the control apparatus comprising:
an energization execution section (16c) configured to control the conversion circuit of each rechargeable battery module to execute an energization operation between the rechargeable batteries and the load; and
a temperature-raising execution section (16d) configured to control the conversion circuit of each rechargeable battery module to execute a temperature-raising operation for performing charging/discharging among the rechargeable batteries, thus raising temperatures of the rechargeable batteries, wherein:
the control apparatus is configured to simultaneously execute the energization operation by the energization execution section and the temperature-raising operation by the temperature-raising execution section.

13. A control program to be applied to a power supply system (10, 210) in which a plurality of rechargeable battery modules (30, 60, 90) and a load (21) are connected in parallel with a power supply bus (11, 12), each of the plurality of rechargeable battery modules including a rechargeable battery (31, 61, 91) and a conversion circuit (40, 70, 100) that converts power input from the rechargeable battery to paired primary-side terminals (41, 42, 71, 72, 101, 102) of the conversion circuit and outputs converted power from paired secondary-side terminals (47, 48, 77, 78, 107, 108) of the conversion circuit, a positive electrode and a negative electrode of the rechargeable battery of each rechargeable battery module being connected to the paired primary-side terminals, respectively, of the conversion circuit, the rechargeable battery of each rechargeable battery module being connected in series to the paired secondary-side terminals of the conversion circuit, the control program causing a computer to:
control the conversion circuit of each rechargeable battery module to execute an energization operation between the rechargeable batteries and the load;
control the conversion circuit of each rechargeable battery module to execute a temperature-raising operation for performing charging/discharging among the rechargeable batteries, thus raising temperatures of the rechargeable batteries; and
cause the energization execution section and the temperature-raising execution section to simultaneously execute the energization operation by the energization execution section and the temperature-raising operation.
